(19) Europäisches Patentamt
European Patent Office
Office européen des brevets

(11) **EP 4 250 580 A1**

# (12) EUROPEAN PATENT APPLICATION
published in accordance with Art. 153(4) EPC

(43) Date of publication:
**27.09.2023 Bulletin 2023/39**

(21) Application number: **21894034.4**

(22) Date of filing: **19.11.2021**

(51) International Patent Classification (IPC):
***H04B 7/0413*** *(2017.01)* ***H04B 7/0456*** *(2017.01)*
***H04B 7/06*** *(2006.01)*

(52) Cooperative Patent Classification (CPC):
**H04B 7/0413; H04B 7/0456; H04B 7/06**

(86) International application number:
**PCT/CN2021/131837**

(87) International publication number:
**WO 2022/105887 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2020 CN 202011311649**

(71) Applicant: **Vivo Mobile Communication Co., Ltd.**
**Dongguan, Guangdong 523863 (CN)**

(72) Inventors:
- **YUAN, Pu**
  **Dongguan, Guangdong 523863 (CN)**
- **JIANG, Dajie**
  **Dongguan, Guangdong 523863 (CN)**
- **LIU, Jin**
  **Dongguan, Guangdong 523863 (CN)**
- **BAI, Yongchun**
  **Dongguan, Guangdong 523863 (CN)**
- **CHEN, Baolong**
  **Dongguan, Guangdong 523863 (CN)**

(74) Representative: **Raffay & Fleck**
**Patentanwälte**
**Grosse Bleichen 8**
**20354 Hamburg (DE)**

## (54) INFORMATION TRANSMISSION METHOD AND APPARATUS, AND COMMUNICATION DEVICE AND STORAGE MEDIUM

(57) Disclosed are an information transmission method and apparatus, and a device and a storage medium. The method is applied to a communication device, and comprises: acquiring the channel quality of a plurality of antenna channels; determining an antenna working mode according to the channel quality; and performing information transmission, wherein the antenna working mode comprises an MIMO mode, an FTN mode, or an MIMO-FTN mode in which the same antenna port group in the plurality of antenna channels works in an MIMO precoding manner and in which different antenna port groups work in an FTN manner, and each antenna port group comprises at least one antenna channel.

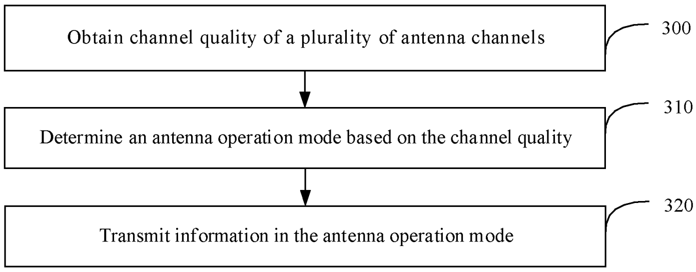


FIG. 3

EP 4 250 580 A1

## Description

## CROSS-REFERENCE TO RELATED APPLICATIONS

This application claims priority to Chinese Patent Application No. 202011311649.7, filed in China on November 20, 2020, which is incorporated herein by reference in its entirety.

## TECHNICAL FIELD

This application belongs to the field of communications technologies, and specifically, relates to an information transmission method and apparatus, a communications device, and a storage medium.

## BACKGROUND

To obtain an additional diversity gain or improve spectral efficiency in a communications system, a multiple-input multiple-output-orthogonal frequency division multiplexing (Multiple-Input Multiple-Output-Orthogonal Frequency Division Multiplexing, MIMO-OFDM) scheme may be used. In a multiple-in multiple out (multiple-in multiple out, MIMO) scheme, transmitted signals on different transmit antennas are completely synchronous. To be specific, in a case that transmitted signals on different antennas are superposed, peaks of signal waveforms are superposed, and valleys of signal waveforms are superposed. In the MIMO, a significant diversity gain can be obtained, and transmission reliability is ensured. However, multi-stream MIMO is limited by an error vector magnitude (Error Vector Magnitude, EVM) of higher-order modulation, and spectral efficiency improvement is limited in some scenarios.

## SUMMARY

An objective of the embodiments of this application is to provide an information transmission method and apparatus, a communications device, and a storage medium, to resolve a problem that frequency efficiency cannot be improved in a MIMO scheme.

According to a first aspect, an information transmission method is provided, applied to a communications device. The method includes:

obtaining channel quality of a plurality of antenna channels;
determining an antenna operation mode based on the channel quality; and
transmitting information in the antenna operation mode, where
the antenna operation mode includes: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, where each antenna port group includes at least one antenna channel.

According to a second aspect, an information transmission apparatus is provided, applied to a communications device. The apparatus includes:

a first obtaining module, configured to obtain channel quality of a plurality of antenna channels;
a first determining module, configured to determine an antenna operation mode based on the channel quality; and
a first transmission module, configured to transmit information in the antenna operation mode, where
the antenna operation mode includes: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, where each antenna port group includes at least one antenna channel.

According to a third aspect, a communications device is provided, where the communications device includes a processor, a memory, and a program or instructions stored in the memory and capable of running on the processor, and when the program or instructions are executed by the processor, the steps of the method according to the first aspect are implemented.

According to a fourth aspect, a readable storage medium is provided, where the readable storage medium stores a program or instructions, and when the program or instructions are executed by a processor, the steps of the method according to the first aspect are implemented.

According to a fifth aspect, a chip is provided, where the chip includes a processor and a communications interface, the communications interface is coupled to the processor, and the processor is configured to run a program or instructions for a communications device, to implement the method according to the first aspect.

In the embodiments of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

## BRIEF DESCRIPTION OF THE DRAWINGS

FIG. 1 is a block diagram of a wireless communications system according to an embodiment of this application;
FIG. 2 is a schematic diagram of comparison between a signal with time-domain overlapping and a signal without time-domain overlapping according to an embodiment of this application;
FIG. 3 is a schematic flowchart of an information transmission method according to an embodiment of this application;
FIG. 4 is a schematic diagram of generating an FTN/OVTDM symbol in a multi-antenna system according to an embodiment of this application;
FIG. 5 is a schematic diagram of transmission in a MIMO-FTN mode according to an embodiment of this application;
FIG. 6 is a schematic diagram of a method for determining an antenna operation mode according to an embodiment of this application;
FIG. 7 is a schematic diagram of downlink measurement according to an embodiment of this application;
FIG. 8 is a schematic diagram of uplink measurement according to an embodiment of this application;
FIG. 9 is a schematic structural diagram of an information transmission apparatus according to an embodiment of this application;
FIG. 10 is a schematic structural diagram of a communications device according to an embodiment of this application;
FIG. 11 is a schematic diagram of a hardware structure of a network side device according to an embodiment of this application; and
FIG. 12 is a schematic diagram of a hardware structure of a terminal according to an embodiment of this application.

## DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to applications other than an NR system application, for example, a $6^{th}$ generation ($6^{th}$ Generation, 6G) communications system.

FIG. 1 is a block diagram of a wireless communications system according to an embodiment of this application. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VLTE), or pedestrian user equipment (PLTE). The wearable device includes a band, a headset, glasses, or the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission reception point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

To fully describe the embodiments of this solution, the following content is described first.

1. MIMO

In a MIMO system, both a transmit end and a receive end perform communication through a plurality of antennas that can operate simultaneously. In the MIMO system, complex signal processing technologies are usually used to significantly enhance reliability, a transmission range, and a throughput. A transmitter simultaneously transmits a plurality of radio frequency signals by using these technologies, and a receiver then recovers information from these signals.

A common objective of different MIMO modes is to use known spatial correlation to obtain an additional diversity gain or improve spectral efficiency. For example, there are mainly the following several MIMO modes in the long term evolution (Long Term Evolution, LTE) protocol:

Mode 1: a single-antenna operation mode
a conventional antenna operation mode of a wireless standard.
Mode 2: open-loop transmit diversity
Orthogonal spatial channels are formed on a plurality of antennas by using a mathematical method of complex conjugation, and transmit the same data stream to improve transmission reliability.
Mode 3: open-loop spatial multiplexing
A "multipath effect" is artificially created on different antennas, where one antenna normal performs transmission, and a phase shift step is introduced into another antenna. A transmission relationship between a plurality of antennas constitutes a complex matrix that transmits different data streams in parallel. The complex matrix is randomly selected at a transmit end and does not rely on a feedback result of a receive end. This is open-loop (Open Loop) spatial multiplexing.
Mode 4: closed-loop spatial multiplexing
When transmitting a plurality of data streams in parallel, a transmit end selects, based on a channel estimation result that is fed back, a complex matrix for creating a "multipath effect". This is closed-loop (Close Loop) spatial multiplexing.
Mode 5: MU-MIMO (Multi-User Multiple-Input Multiple-Output, multi-user multiple-input multiple-output)
Parallel transmission of a plurality of data streams is implemented by a combination of a plurality of user equipments (User Experience, UE). This is multi-user spatial multiplexing, namely, MU-MIMO (Multi User MIMO).
Mode 6: closed-loop transmit diversity with a rank = 1
This is a special case of closed-loop spatial multiplexing, and only one data stream is transmitted, that is, a rank of a spatial channel = 1. This operation mode performs a function of improving transmission reliability, and is actually a transmit diversity mode.
Mode 7: beamforming
In a case that a plurality of antennas operate cooperatively, different phase migration schemes are calculated in real time based on channel conditions of a base station and UE, and a beam directed to specific LTE is formed by using a phase interference superposition principle between antennas.

Currently, in the operation modes 3 to 6 of the MIMO system, different data streams are transmitted through different antennas to improve spectral efficiency. An upper limit of the number of streams in MIMO multi-stream transmission is determined by the number of antennas. On this basis, in a case that channel quality is good or a signal-to-noise ratio (Signal Noise Ratio, SNR) of a received signal is large, the system can further improve spectral efficiency by using a higher-order modulation scheme. However, due to a limitation of a minimum EVM of a receiver, a marginal effect of spectral efficiency of the system decreases with an increase of a modulation order. Therefore, in a case that the SNR is sufficiently large, a Faster-than-Nyquist signaling/overlapped time division multiplexing (Faster-than-Nyquist Signaling/Overlapped Time Division Multiplexing, FTN/OVTDM) technology is introduced into the MIMO multi-antenna system. A plurality of antennas are used for delay-superposition transmission of signals, to further improve spectral efficiency.

In a conventional single-antenna system, an FTN/OVTDM signal is generated by an oversampled signal passing through a shaping filter. Under the premise that designed sampling accuracy of the shaping filter is determined, a higher superposition layer requires a higher signal oversampling rate. Consequently, higher-order superposition poses challenges to a hardware design. In the multi-antenna system, different antenna elements or ports transmit signals with different time delays, so that an FTN/OVTDM signal is formed through superposition on an air interface. Faster-than-Nyquist sampling and transmission are implemented by using an existing multi-antenna design in the MIMO system, thereby reducing complexity of a baseband design and hardware costs.

2. Faster-than-Nyquist transmission, namely, Faster-than-Nyquist signaling

FTN/OVTDM is a signal processing method in which an appropriate amount of inter-symbol interference (Inter-Symbol Interference, ISI) and/or inter-channel interference (Inter-Channel Interference, ICI) is artificially introduced by performing shifting and superposition (also referred to as waveform coding) on transmitted signals. An objective is to increase a symbol transmission rate, that is, increase the number of symbols transmitted per hertz per second (Hz×s). A full name of FTN is Faster-than-Nyquist. OVXDM (Overlapped X Domain Multiplexing) (X represents any domain, for example, time T, space S, frequency F, or hybrid H) includes OVTDM (Overlapped Time Domain Multiplexing), OVFDM (Overlapped Frequency Domain Multiplexing), OVCDM (Overlapped code Domain Multiplexing), and a combination technology of OVTDM and OVFDM. A full name of OVXDM is overlapped X-domain multiplexing, and may be represented by using FTN (Faster Than Nyquist, multi-carrier Faster-than-Nyquist). In addition, the introduced ISI and ICI increase decoding complexity, and may lead to an increase of a bit error rate. However, negative effects caused by the increase of the bit error rate can be suppressed by using an advanced decoding algorithm. Generally, a channel capacity can still be increased by using the method of increasing the symbol transmission rate described above. An expression is as follows:

$$s(t)=x(t)*h(t)=\sum_{n}^{N}\sum_{k}^{K}a_{k,n}h(t-nT_{\Delta})e^{j2\pi tkf_{\Delta}},$$

where $T_{\Delta} = \tau T, \tau \in (0,1)$, and $\tau$ is a time-domain overlapping coefficient; particularly, in OVXDM, $\tau=\frac{1}{N}$, and therefore $T_{\Delta}=\frac{T}{N}$; and $f_{\Delta}=\frac{\zeta}{T},\zeta\in(0,1)$, and $\zeta$ is a frequency-domain overlapping coefficient; particularly, in OVXDM, $\zeta=\frac{1}{K}$, and therefore $f_{\Delta}=\frac{1}{KT}$.

FIG. 2 is a schematic diagram of comparison between a signal with time-domain overlapping and a signal without time-domain overlapping according to an embodiment of this application. As shown in FIG. 2, occurrence of ISI is depicted. In the case of T = 0.8, that is, after a time-domain waveform overlapping coefficient $\tau$ is 0.8, an amplitude of a pulse waveform of a processed signal carrying information of another sampling point at a moment of each sampling point is not zero. As a result, ISI occurs.

Assuming that an impulse response function of a multipath channel is $h_{CH}(t)$, a signal passing through the channel may be equivalently expressed as follows:

$$s'(t)=x(t)*h(t)*h_{CH}(t)\overset{\Delta}{=}\sum_{\tilde{n}}^{\tilde{N}}\sum_{\tilde{k}}^{\tilde{K}}a_{\tilde{n},\tilde{k}}h(t-T_{\Delta}^{\tilde{n}})e^{j2\pi tf_{\Delta}^{\tilde{k}}},$$

where

$$T_{\Delta}^{\tilde{n}} \leq nT_{\Delta},\ f_{\Delta}^{\tilde{k}} \leq kf_{\Delta},\ N \leq \tilde{N},\ K \leq \tilde{K}.$$

An FTN/OVTDM signal is mainly generated in two manners: (1) In a single-antenna system, an FTN/OVTDM signal may be equivalently generated by performing oversampling and shaping filtering on a signal, and an effect thereof is similar to a convolutional encoder operating at a modulation level. (2) In a multi-antenna system, an FTN/OVTDM signal may be generated in a manner closer to a physical meaning of the signal. To be specific, each antenna element or port of a plurality of antennas is controlled to sequentially transmit signals at a delay $T_{\Delta}$ according to a specified shift and superposition principle. Signals transmitted by different antenna elements or ports at different delays are superposed on an air interface, and ISI is introduced between the sampling points of the signals, to form an FTN/OVTDM signal.

Faster-than-Nyquist transmission is a new signal processing technology that is currently considered to be able to break through a Nyquist sampling rate and further approach a physical limit of a channel capacity. A derivative technology thereof is OVXDM. In an OVXDM/FTN technology, ISI and/or ICI are artificially introduced in time domain or frequency domain based on a waveform coding theory, thereby increasing a symbol transmission rate and increasing an equivalent channel capacity. However, a waveform-coded signal imposes a higher requirement on performance of a receiver, increasing complexity of a decoding algorithm and power consumption of hardware. Generally, a larger time-frequency-domain overlapping coefficient used in waveform coding, that is, worse ISI and ICI artificially introduced, indicates more states that need to be determined on a receiver side and higher complexity of a receiving algorithm.

In a complex electromagnetic wave transmission environment in a city, a large number of scattering, reflection, and refraction surfaces exist, and consequently, wireless signals arrive at a receive antenna through different paths at different moments, that is, a multipath effect of transmission is caused by signals in different paths. ISI occurs in a case that consecutive symbols of a transmitted signal simultaneously arrive through different paths, or in a case that a symbol arrives within a delay extension of a previous symbol. Similarly, in frequency domain, due to a frequency offset effect, a Doppler effect, and other causes, each subcarrier on which a signal is located has a frequency offset to different degrees, resulting in overlapping of subcarriers that may be originally orthogonal, that is, ICI occurs. The ISI/ICI generated during signal transmission is superposed with ISI/ICI introduced by waveform coding during transmission, imposing a higher requirement on a decoding capability of a receiver. A more complex receiver algorithm may be used to adapt to a fading channel. For example, a method such as channel pre-equalization or an iterative algorithm of joint channel decoding is used. However, during practical application, an actual system is usually unable to use an ideal receiver due to limitations on conditions such as costs and power consumption, complexity of an implemented decoding algorithm is limited, and decoding cannot be performed correctly in a case that ISI/ICI exceeds a specific threshold. In addition, energy consumption also increases in a case that decoding complexity of a receiver increases, which is not conducive to energy saving and power consumption reduction for a terminal.

Therefore, clearly, an FTN/OVTDM system is not superior to a conventional MIMO system in all scenarios.

Therefore, a main concept of the embodiments of this application are as follows: An operation mode of a multi-antenna system can be flexibly adjusted by using priori information of a wireless channel, a channel measurement result, and the like, so that the multi-antenna system can flexibly switch between an FTN/OVTDM mode and a conventional MIMO operation mode, and a receiver can track a time-varying characteristic of a fading channel and remain in the best operation state.

The following describes in detail an information transmission method and apparatus provided in the embodiments of this application with reference to the accompanying drawings and by using specific embodiments and application scenarios thereof.

FIG. 3 is a schematic flowchart of an information transmission method according to an embodiment of this application. The method is applied to a communications device. As shown in FIG. 3, the method includes the following steps.

Step 300: Obtain channel quality of a plurality of antenna channels.

Step 310: Determine an antenna operation mode based on the channel quality.

Step 320: Transmit information in the antenna operation mode.

The antenna operation mode includes: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO manner and different antenna port groups operate in an FTN manner, where each antenna port group includes at least one antenna channel.

Specifically, in MIMO transmission, an additional gain is provided at a transmit end by using spatial correlation between a plurality of antennas and in a digital-domain beamforming (that is, MIMO precoding performed based on channel characteristics, and the like) manner. An essence thereof is a gain obtained by using additional spatial freedom provided by the plurality of antennas, and the gain may be referred to as a MIMO gain.

Specifically, for an FTN signal, a characteristic of delay superposition between signals transmitted by different antennas is used, to transmit more information bits within the same transmit time interval (transmit time interval, TTI). For example, in a case that the number K of overlapping layers is 2, this is equivalent to completing, within a time T, transmission of bits that are to be transmitted within a time 2T in Nyquist transmission, to obtain an additional gain. An essence thereof is to additionally increase coding freedom by using a signal waveform superposition rule known to the transmit end and a receive end, so that information is compressed according to a coding rule and then transmitted to improve spectral efficiency. The gain may be referred to as an FTN gain.

In the MIMO mode, transmitted signals on different transmit antennas are completely synchronous. To be specific, in a case that transmitted signals on different antennas are superposed, peaks of signal waveforms are superposed, and valleys of signal waveforms are superposed. Through measurement on MIMO channel information, an appropriate precoding matrix is selected to obtain additional benefits of a multi-antenna system. For example, a diversity gain is obtained through space-time coding, or multi-stream transmission is implemented through precoding to improve spectral efficiency.

Specifically, in this embodiment, a multi-antenna system in MIMO may seamlessly switch between two or three modes.

For example, in the case of a low SNR (Signal-to-Noise Ratio), a significant diversity gain can be obtained in the MIMO mode, and transmission reliability is ensured. However, in the case of a high SNR, multi-stream MIMO is limited by an EVM of higher-order modulation, and spectral efficiency improvement is limited. In this case, the FTN mode may be used. Therefore, the transmit end and/or the receive end may trigger operation mode switching through measurement and feedback on channel state information.

Specifically, an objective is to flexibly adjust an operation mode of a multi-antenna system by using priori information of a wireless channel, a channel measurement result, and the like, so that the multi-antenna system can flexibly switch between a plurality of operation modes, for example, switch to the FTN mode, the MIMO mode, or the MIMO-FTN mode, and a signal transmission mode is optimized based on a channel state change through flexible switching between the plurality of operation modes. Therefore, channel quality may be obtained through measurement and feedback on channel quality of a plurality of antenna channels. Then an antenna operation mode is determined based on the channel quality, and the transmit end and/or the receive end trigger switching. Finally, information is transmitted in the determined antenna operation mode, and a process and signaling are protected.

It may be understood that the multi-antenna system in this embodiment may switch between the following operation modes:

(1) Mode 1: the MIMO mode. In this mode, an antenna operates in a conventional manner, and different coefficients are preset in antenna channels for transmission precoding, to implement digital beamforming.

(2) Mode 2: the FTN mode. FIG. 4 is a schematic diagram of generating an FTN/OVTDM symbol in a multi-antenna system according to an embodiment of this application. As shown in FIG. 4. In this mode, an antenna operates in an FTN manner. To be specific, antenna channels transmit signals at specific intervals, and the signals are superposed on an air interface to form an FTN signal.

(3) Mode 3: In the MIMO-FTN mode, some antenna channels form a set, namely, an antenna port group. Channels in the group perform MIMO precoding for digital beamforming, so that a digital beam is directed to a specific direction. Antenna port groups transmit signals at specific intervals, so that signals are superposed on an air interface to form an FTN signal.

FIG. 5 is a schematic diagram of transmission in a MIMO-FTN mode according to an embodiment of this application. FIG. 5 is used as an example. A multi-antenna system in FIG. 5 has a total of eight antenna elements. Antenna elements in each dashed-line box are connected to the same channel (an RF chain or a digital channel). A channel 1 and a channel 2 form a group, referred to as an antenna port group 1, and may cooperatively perform digital beamforming by using a precoding matrix $[\omega_0,\omega_1]$. A channel 3 and a channel 4 form a group, referred to as an antenna port group 2, and may cooperatively perform digital beamforming by using a precoding matrix $[\omega_0', \omega_1']$. A function of $[\omega_0,\omega_1]$ and $[\omega_0', \omega_1']$ is to make signal beams respectively corresponding to the antenna port group 1 and the antenna port group 2 face specific directions, or maximize energy of signals respectively corresponding to the antenna port group 1 and the antenna port group 2 (for example, a layer is transmitted through the antenna port group 1, and after precoding, a beam of the layer is directed to target UE). On this basis, information of the antenna port group 1 and information of the antenna port group 2 are transmitted at different delays $[\lambda_0,\lambda_1]$ and therefore superposed on an air interface to form an FTN signal.

Uplink and downlink in this embodiment of this application are defined as follows: The uplink is from a terminal side such as user equipment to a network side such as a base station, and the downlink is from a network side such as a base station to a terminal side such as user equipment.

It may be understood that this embodiment is applicable not only to uplink/downlink information transmission, but also to sidelink information transmission.

Specifically, the communications device may be a network side device, for example, a base station. In this case, a transmit end is a network side, a receive end is a terminal side, and corresponding transmitted information is downlink information.

Specifically, the communications device may be a terminal, for example, UE. In this case, a transmit end is a terminal side, a receive end is a network side, and corresponding transmitted information is uplink information.

Specifically, the communications device may be a terminal, for example, UE, and a communications peer is also a terminal. In this case, a transmit end is a terminal, a receive end is a terminal, and corresponding transmitted information is sidelink information.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

Optionally, the determining an antenna operation mode based on the channel quality includes at least one of the following:

in a case that the channel quality is less than or equal to a first threshold, determining that the antenna operation mode is the MIMO mode;
in a case that the channel quality is greater than or equal to a second threshold, determining that the antenna operation mode is the FTN mode; and
in a case that the channel quality is greater than the first threshold and less than the second threshold, determining that the antenna operation mode is the MIMO-FTN mode.

Specifically, an advantage of an FTN/OVTDM system relative to a conventional orthogonal frequency division multiplexing (Orthogonal Frequency Division Multiplexing, OFDM) system in terms of a throughout mainly lies in a high-SNR area. In the high-SNR area, noise has small impact on a received signal, and a receiver is likely to correctly perform decoding based on a known constraint relationship for inter-symbol coding in FTN/OVTDM, so that a bit error rate is quite low. In a low-SNR area, noise has large impact on a received signal, and destroys a constraint relationship for inter-symbol coding. Consequently, a bit error rate is higher than that of the conventional OFDM system.

Specifically, in the case of determining an antenna operation mode based on channel state information, the antenna operation mode may be determined based on a signal to interference plus noise ratio SINR in the channel state information.

FIG. 6 is a schematic diagram of a method for determining an antenna operation mode according to an embodiment of this application. As shown in FIG. 6, for an antenna set such as an antenna port group, in a case that a channel state is good, that is, channel quality is greater than or equal to a second threshold, for example, an SNR of a received signal is greater than the second threshold, the antenna port group may switch to an FTN mode when an FTN gain is greater than a MIMO gain. On the contrary, in a case that a channel state is poor, channel quality is less than or equal to a first threshold, and an FTN gain is less than a MIMO gain, the antenna port group may switch to a MIMO beamforming mode. In a case that channel quality is greater than the first threshold and less than the second threshold, the antenna port group may switch to a MIMO-FTN mode. Further, an antenna grouping manner and a cooperative operation mode between antenna groups may be determined based on the number of available antennas and the number of FTN overlapping layers required. For example, in a case that the number of antennas is a plurality of times of the number of FTN overlapping layers, it may be determined that the antenna operation mode is the MIMO-FTN mode.

Specifically, the first threshold and the second threshold may be predetermined, configured by a network, or specified in a protocol.

In this embodiment of this application, the multi-antenna system in MIMO may operate in two states: conventional MIMO and FTN/OVTDM. At least one MIMO mode needs to be added to a protocol, and may be referred to as an FTN mode in this application, corresponding to transmission of an FTN/OVTDM signal generated by a plurality of antennas. For ease of description, the conventional MIMO mode may be referred to as a MIMO mode

In this embodiment of this application, based on different channel conditions, in the case of a received SNR $\geq$ Thh (the second threshold), a large gain is obtained when FTN is used; in the case of a received SNR < Thl (the first threshold), better effects can be achieved when conventional MIMO is used; and in the case of Thl < SNR < Thh, a hybrid mode is used to achieve a balance between a MIMO gain and an FTN gain, thereby further dynamically optimizing spectral efficiency with respect to the SNR.

Optionally, after the determining an antenna operation mode based on the channel quality, the method further includes:

switching the antenna operation mode based on updated channel quality; and
performing transmission in a switched-to antenna operation mode.

Specifically, to enable the multi-antenna system to adaptively switch between operation modes based on the channel quality, an updated information transmission status may be further monitored after the antenna operation mode is determined, and it is determined, based on the information transmission status, that the antenna operation mode needs to be switched.

For example, a current antenna operation mode is the FTN mode. When it is determined that a plurality of consecutive information transmissions do not meet a transmission condition, it may be determined that the current antenna operation mode needs to be switched. Based on the updated channel quality, it may be determined that the current antenna operation mode may be switched to the MIMO-FTN mode, which is an antenna operation mode adapting to the current channel quality. Therefore, the antenna operation mode can be switched.

It may be understood that the updated channel quality may be channel quality obtained through measurement after it is determined that the antenna operation mode needs to be switched, or may be an integrated value or an average value of channel quality obtained through a plurality of channel measurements after the antenna operation mode is determined.

Specifically, after an antenna operation mode to be switched to is determined and switching is performed, information transmission continues.

It may be understood that, in this embodiment of this application, in the case of determining whether information transmission meets a condition, determining may be performed per transmission of one or more data blocks.

Optionally, the channel quality is determined based on a first channel quality parameter, and the first channel quality parameter includes at least one of a signal-to-noise ratio SNR, a signal to interference plus noise ratio (Signal to Interference plus Noise Ratio, SINR), a reference signal received power (Reference Signal Receiving Power, RSRP), and reference signal received quality (Reference Signal Receiving Quality, RSRQ).

Specifically, the channel quality is determined based on the first channel quality parameter, which may include an SNR, an SINR, a reference signal received power RSRP, reference signal received quality RSRQ, and the like that can be obtained through pilot measurement; or may include a Doppler frequency shift, a residual frequency offset (a frequency offset after frequency offset correction), a multipath quantity, a relative speed, and the like. These parameters may directly affect a signal frequency offset, ISI, and ICI, or may be indirectly reflected in a bit error rate.

It may be understood that the relative speed is a radial speed between the transmit end and the receive end.

Optionally, in a case that the communications device is a terminal, the obtaining channel quality of a plurality of antenna channels includes:

receiving a downlink reference signal through the plurality of antenna channels; and
measuring the downlink reference signal to obtain the channel quality.

Specifically, in a case that the communications device is a terminal and the communications peer is a network side device, the current transmission is uplink transmission. It may be understood that downlink measurement may be used in an uplink transmission scenario based on channel reciprocity.

Specifically, downlink reference information transmitted by the network side device may be received through a plurality of antenna channels, and the downlink reference information may be measured to obtain downlink channel quantity as a reference for uplink channel quality.

It may be understood that, in this embodiment of this application, uplink measurement may alternatively be used in an uplink transmission scenario, and a base station measures an uplink channel and notifies the terminal of channel quality.

Optionally, in a case that the communications device is a terminal and the communications peer is a terminal, the obtaining channel quality of a plurality of antenna channels includes:

transmitting a sidelink reference signal through the plurality of antenna channels; and
receiving channel quality fed back by the communications peer, where the channel quality is obtained by the communications peer through measurement based on the sidelink reference signal.

Specifically, in a case that the communications device is a terminal, the communications peer may alternatively be a terminal. In this case, the current transmission is sidelink transmission, and channel measurement may also be performed.

Specifically, a sidelink reference signal may be transmitted to a terminal of the communications peer. After receiving the sidelink reference signal, the communications peer may measure the sidelink reference signal to obtain channel quality, and notify a terminal at a transmit end. The terminal at the transmit end may receive the channel quality fed back by the communications peer.

Optionally, in a case that the communications device is a network side device, the obtaining channel quality of a plurality of antenna channels includes:

transmitting a downlink reference signal through the plurality of antenna channels; and
receiving channel state information (Channel State Information, CSI) fed back by the terminal to obtain the channel quality, where the CSI is obtained by the terminal through measurement based on the downlink reference signal.

Specifically, in a case that the communications device is a network side device, the communications peer is a terminal, the current transmission is downlink transmission, and therefore downlink measurement may be used.

In a downlink measurement scenario, the network side device transmits a downlink reference signal, the terminal measures a channel based on the downlink reference signal and transmits a feedback message to the network side, and the network side may receive channel state information CSI fed back by the terminal.

Optionally, in a case that the communications device is a network side device, the obtaining channel quality of a plurality of antenna channels includes:

receiving an uplink reference signal through the plurality of antenna channels; and
measuring the uplink reference signal to obtain the channel quality.

Specifically, in a case that the communications device is a network side device, the communications peer is a terminal, and the current transmission is downlink transmission. In a downlink transmission scenario, uplink measurement may alternatively be used based on channel reciprocity.

In an uplink measurement scenario, the terminal side transmits an uplink reference signal, and the network side measures a channel based on the uplink reference signal to obtain the channel quality.

It may be understood that a premise for using uplink measurement in a downlink transmission scenario or using downlink measurement in an uplink transmission scenario is an assumption of channel reciprocity. That is, a channel from a transmit end to a receive end is similar to a channel from the receive end to the transmit end. For example, this may be used in a time division duplexing (Time Division Duplexing, TDD) scenario.

It may be understood that the channel quality obtained through measurement may be used for determining an antenna operation mode, the number of overlapping layers for FTN, and the like.

Optionally, in a case that the antenna operation mode is the MIMO-FTN mode, the method further includes:

determining the number of overlapping layers in a case that the FTN mode is used for operation between antenna port groups; and
determining a precoding matrix indicator PMI in a case that the MIMO mode is used for operation within an antenna port group, where
the performing transmission in the antenna operation mode includes:
performing transmission based on the PMI and the number of overlapping layers.

Specifically, in the MIMO-FTN mode, some antenna channels form a set, namely, an antenna port group. Channels in the group perform MIMO precoding based on a precoding matrix indicator (Precoding Matrix Indicator, PMI) for digital beamforming, so that a digital beam is directed to a specific direction and MIMO information is obtained. Then antenna port groups transmit signals at specific intervals, so that signals are superposed on an air interface to form a MIMO-FTN signal. Therefore, the number of overlapping layers in a case that the FTN mode is used for operation between antenna port groups and the precoding matrix indicator PMI in a case that the MIMO mode is used for operation within an antenna port group may be determined before the information is transmitted.

Specifically, the number of overlapping layers may be used for representing FTN/OVTDM signal features.

Optionally, the determining the number of overlapping layers in a case that the FTN mode is used for operation between antenna port groups, includes:
determining the number of overlapping layers based on the channel quality.

Specifically, the number of overlapping layers may be determined based on the channel quality.

Specifically, in this embodiment of this application, when delay superposition information of a plurality of antennas is used, information with an overlapping coefficient of $\frac{1}{K}$ may be generated by using $K$ antennas, which is equivalent to OVTDM information with K overlapping layers.

Optionally, the channel quality is determined based on a second channel quality parameter, and the second channel quality parameter includes at least one of the following: an SINR, an RSRP, a multipath quantity, a relative speed, a Doppler frequency shift, a residual frequency offset after frequency offset correction, and a bit error rate.

Specifically, in the case of determining the number of overlapping layers based on the channel quality, determining methods may include but are not limited to the following:

i. The number of overlapping layers is determined based on an SINR and a reference signal received power RSRP. A table of a one-to-one correspondence between a set of SINRs and the number of overlapping layers may be specified in a protocol, and the number of overlapping layers may be determined through SINR measurement and table lookup. The correspondence in the table may be obtained based on an empirical value of a simulation test.

ii. The number of overlapping layers is determined based on an S SINR, an RSRP, a multipath quantity, and a relative speed.

iii. The number of overlapping layers is determined based on an SINR, an RSRP, a Doppler frequency shift or a residual frequency offset, and a multipath quantity.

iv. The number of overlapping layers is determined based on a bit error rate, an RSRP, a multipath quantity, and a relative speed.

v. The number of overlapping layers is determined based on a bit error rate, an RSRP, a Doppler frequency shift or a residual frequency offset, and a relative speed.

Optionally, the determining a precoding matrix indicator PMI in a case that the MIMO mode is used for operation within an antenna port group, includes:

obtaining channel measurement information of the antenna port group; and
determining the precoding matrix indicator PMI of the antenna port group based on the channel measurement information of the antenna port group.

Specifically, for an antenna port group, digital beamforming may be performed on information of an antenna channel in the group based on a corresponding precoding matrix, to obtain MIMO information, so as to ensure that beams of MIMO information in one antenna port group are directed to the same spatial position.

Specifically, a PMI may be first determined based on channel measurement information of the antenna port group, and a precoding matrix is determined based on the PMI. Therefore, the precoding matrix indicator PMI may be determined first.

Specifically, after an antenna port group is obtained by grouping antenna channels, channel measurement and feedback may be performed per antenna port group, to obtain channel measurement information of the antenna port group, and then a precoding matrix used for each group is determined based on a PMI in the channel measurement information of the antenna port group.

Specifically, after the channel measurement information of the antenna port group is obtained, an appropriate precoding matrix may be selected as required based on the PMI and allocated to each antenna channel, to implement MIMO precoding and transmission.

It may be understood that the precoding matrix may be obtained through a realtime operation, or may be selected from a preset codebook.

A downlink MU (multi-user)-MIMO scenario is used as an example. In this embodiment, an antenna array at a transmit end is divided into a plurality of antenna channels. A specific number of antenna channels may cooperate to perform digital beamforming and transmission, that is, each antenna channel is assigned a coefficient of a precoding matrix corresponding to the beam is allocated to each antenna channel. Details are as follows:

(1) A base station may notify LTE of antenna port (antenna port) combination information related to feedback of precoding-related information (for example, a PMI). For example, the base station notifies the LTE that four antenna ports need to be measured: ports 0, 1, 2, and 3. The four antenna ports may correspond to channels 1, 2, 3, and 4 respectively. In addition, antenna port combinations that are related to the feedback of the precoding-related information and that may be indicated by the base station to the UE are as follows: The antenna ports 0 and 1 form an antenna port group 1, and the antenna ports 2 and 3 form an antenna port group 2. Therefore, the UE can feed back a PMI for each antenna port group during subsequent feedback.
(2) The LTE measures the antenna ports based on the antenna port information indicated by the base station.
(3) The UE feeds back corresponding precoding-related information based on the measurement result and based on the antenna port combination information indicated by the base station. For example, a PMI of the antenna port group 1 that is fed back by the UE is a PMI 1, and a PMI of the antenna port group 2 that is fed back by the UE is a PMI 2.
(4) The base station determines a precoding matrix based on the precoding matrix information PMI fed back by the UE, performs digital beamforming, and finally performs inter-group FTN to transmit downlink information.

Optionally, in a case that the communications device is a network side device, the determining the precoding matrix indicator PMI of the antenna port group based on the channel measurement information of the antenna port group includes:

transmitting a downlink reference signal and measurement trigger signaling to a terminal through the antenna port group;
receiving channel state information CSI fed back by the terminal based on the measurement trigger signaling; and
determining the precoding matrix indicator PMI of the antenna port group based on the CSI of the antenna port group, where
the CSI is obtained by the terminal through measurement based on the downlink reference signal, and the measurement trigger signaling includes the number of antenna port groups.

Specifically, in the case of performing channel measurement and feedback per an antenna port group, measurement may be performed after measurement trigger signaling transmitted by the transmit end is obtained.

It may be understood that the measurement trigger signaling may include the number of antenna port groups, so that the receive end can know the exact number of groups of channels for which CSI needs to be measured.

It may be understood that the channel measurement performed per antenna port group may be completed in uplink measurement or downlink measurement.

Specifically, in a case that the communications device is a network side device, the communications peer is a terminal, the current transmission is downlink transmission, and therefore downlink measurement may be used.

FIG. 7 is a schematic diagram of downlink measurement according to an embodiment of this application. As shown in FIG. 7, in a downlink measurement scenario, the network side device transmits a downlink reference signal and measurement trigger signaling, the terminal measures a channel of the antenna port group based on the downlink reference signal and transmits a feedback message to the network side, and the network side may receive channel state information CSI fed back by the terminal.

Optionally, in a case that the communications device is a network side device, the obtaining channel measurement information of the antenna port group includes:

transmitting measurement trigger signaling to a terminal through the antenna port group;
receiving an uplink reference signal transmitted by the terminal based on the measurement trigger signaling; and
measuring the uplink reference signal to obtain the channel measurement information, where
the measurement trigger signaling includes the number of antenna port groups.

Specifically, in a case that the communications device is a network side device, the communications peer is a terminal, and the current transmission is downlink transmission. In a downlink transmission scenario, uplink measurement may alternatively be performed per antenna port group based on channel reciprocity.

FIG. 8 is a schematic diagram of uplink measurement according to an embodiment of this application. As shown in FIG. 8, in an uplink measurement scenario, the network side device transmits measurement trigger signaling, the terminal transmits an uplink reference signal per antenna port group after receiving the measurement trigger signaling, and the network side device measures a channel based on the uplink reference signal, to obtain the channel measurement information.

It may be understood that the measurement trigger signaling may include the number of antenna port groups, so that the receive end can know the exact number of groups of channels for which channel measurement information needs to be measured.

It may be understood that a premise for using uplink measurement in a downlink transmission scenario or using downlink measurement in an uplink transmission scenario is an assumption of channel reciprocity. That is, a channel from a transmit end to a receive end is similar to a channel from the receive end to the transmit end. For example, this may be used in a time division duplexing (Time Division Duplexing, TDD) scenario.

Optionally, in a case that the communications device is a terminal, the obtaining channel measurement information of the antenna port group includes:

transmitting measurement request signaling to a network side device through the antenna port group;
receiving a downlink reference signal transmitted by the network side device based on the measurement request signaling; and

measuring the downlink reference signal to obtain the channel measurement information, where
the measurement request signaling includes the number of antenna port groups.

Specifically, in a case that the communications device is a terminal and the communications peer is a network side device, the current transmission is uplink transmission. It may be understood that downlink measurement may be performed per antenna port group in an uplink transmission scenario based on channel reciprocity.
Specifically, measurement request signaling is transmitted through the antenna port group to request downlink reference information from the network side. After receiving the measurement request signaling, the network side transmits downlink reference information per antenna port group. The terminal may measure the downlink reference information to obtain downlink channel measurement information as a reference for uplink channel measurement information.
It may be understood that, in this embodiment of this application, uplink measurement may alternatively be performed per antenna port group in an uplink transmission scenario, and a base station measures an uplink channel and notifies the terminal of uplink channel measurement information.
It may be understood that the measurement trigger signaling may include the number of antenna port groups, so that the receive end can know the exact number of groups of channels for which channel measurement information needs to be measured.
Optionally, in a case that the communications device is a terminal and the communications peer is a terminal, the obtaining channel measurement information of the antenna port group includes:

transmitting a sidelink reference signal and measurement trigger signaling through the plurality of antenna channels; and
receiving channel measurement information fed back by the communications peer based on the measurement trigger signaling, where
the channel measurement information is obtained by the communications peer through measurement based on the sidelink reference signal, and the measurement trigger signaling includes the number of antenna port groups.

Specifically, in a case that the communications device is a terminal, the communications peer may alternatively be a terminal. In this case, the current transmission is sidelink transmission, and channel measurement may also be performed per antenna port group.
Specifically, a sidelink reference signal and measurement trigger signaling may be transmitted to a terminal of the communications peer. After receiving the sidelink reference signal, the communications peer may measure the sidelink reference signal per antenna port group to obtain channel measurement information, and notify a terminal at a transmit end. The terminal at the transmit end may receive the channel measurement information fed back by the communications peer.
It may be understood that the measurement trigger signaling may include the number of antenna port groups, so that the receive end can know the exact number of groups of channels for which channel measurement information needs to be measured.
Optionally, the performing transmission based on the PMI and the number of overlapping layers includes:

for an antenna port group, performing digital beamforming on information of an antenna channel in the group based on a corresponding precoding matrix, to obtain MIMO information, where the corresponding precoding matrix is indicated based on the precoding matrix indicator PMI of the antenna port group;
for MIMO information of at least two antenna port groups, performing superposition based on the number of overlapping layers to obtain MIMO-FTN information; and
transmitting the MIMO-FTN information.

Specifically, after at least one antenna port group is obtained by grouping antenna channels, for information of antenna channels in each antenna port group, a corresponding precoding matrix may be obtained based on a precoding matrix indicator PMI of the antenna port group, and digital beamforming is performed based on the corresponding precoding matrix. In addition, it is ensured that beams of MIMO information in one antenna port group are directed to the same spatial position.
Specifically, an antenna port group may be regarded as a whole and serve as a virtual antenna port, and MIMO information obtained in intra-group MIMO may be regarded as transmitted information of the virtual antenna port. Then, in inter-group FTN, MIMO information of virtual antenna ports may be superposed based on the number of overlapping layers to obtain MIMO-FTN information.
After the MIMO-FTN information is obtained, the MIMO-FTN information may be transmitted.
Optionally, in a case that the antenna operation mode is the FTN mode, the method further includes:

determining the number of overlapping layers based on the channel quality, where
the performing transmission in the antenna operation mode includes:

superposing antenna information based on the number of overlapping layers to obtain FTN information; and transmitting the FTN information.

Specifically, in the FTN mode, the number of overlapping layers may be first determined based on the channel quality, and the antenna information is superimposed based on the number of overlapping layers to obtain the FTN information, and finally, the FTN information is transmitted.
It may be understood that, in the case of determining the number of overlapping layers based on the channel quality, determining methods may include but are not limited to the following:
i. The number of overlapping layers is determined based on an SINR and a reference signal received power RSRP. A table of a one-to-one correspondence between a set of SINRs and the number of overlapping layers may be specified in a protocol, and the number of overlapping layers may be determined through SINR measurement and table lookup. The correspondence in the table may be obtained based on an empirical value of a simulation test.
ii. The number of overlapping layers is determined based on an S SINR, an RSRP, a multipath quantity, and a relative speed.
iii. The number of overlapping layers is determined based on an SINR, an RSRP, a Doppler frequency shift or a residual frequency offset, and a multipath quantity.
iv. The number of overlapping layers is determined based on a bit error rate, an RSRP, a multipath quantity, and a relative speed.
v. The number of overlapping layers is determined based on a bit error rate, an RSRP, a Doppler frequency shift or a residual frequency offset, and a relative speed.
Optionally, the method further includes:

re-determining the number of overlapping layers in a case that a transmission condition is not met, where
the transmission condition includes:

a bit error rate fed back by the communications peer is not less than a first preset threshold; or
the number of received NACK messages transmitted by the communications peer reaches a second preset threshold; or
the number of continuously received NACK messages transmitted by the communications peer reaches a third preset threshold; or
an SNR or an RSRP of a received signal is less than a fourth preset threshold.

Specifically, in a case that the antenna operation mode is the FTN mode, or in a case that the antenna operation mode is the MIMO-FTN mode, the number of overlapping layers may be re-determined in a case that the transmission condition is not met, to achieve a balance between a MIMO gain and an FTN gain in different scenarios, so as to maximize a global throughput, obtain an optimal transmission scheme based on the MIMO-FTN mode, and maximize transmission quality.
Specifically, in a case that the antenna operation mode is the MIMO-FTN mode, after the number of overlapping layers is re-determined in a case that the transmission condition is not met, grouping may be re-performed based on the number of overlapping layers, and measurement and feedback are re-performed to obtain a new precoding matrix.
Specifically, in this embodiment of this application, in the case of determining whether information transmission meets a condition, determining may be performed per transmission of one or more data blocks.
Specifically, the transmission condition may be as follows:

1. A bit error rate fed back by the communications peer is not less than a first preset threshold. If the bit error rate is less than the threshold, it is considered that the transmission condition is not met.
2. The number of packet loss retransmission NACK messages received by the transmit end reaches a second preset threshold, or the transmit end continuously receives NACK messages. For example, a total of M NACK messages are received in a specific period, or N consecutive NACK messages are received. In this case, it is considered that a transmission indicator is not met.
3. An SNR or an RSRP of a received signal is less than a fourth preset threshold. In this case, it is considered that the transmission condition is not met.

It may be understood that the first preset threshold, the second preset threshold, the third preset threshold, and the fourth preset threshold may be configured by a network or specified in a protocol.

Optionally, the method further includes:

in a case that the antenna operation mode is the FTN mode, adjusting a transmission parameter of FTN information based on antenna measurement information, where the antenna measurement information is obtained by measuring an antenna port; or

in a case that the antenna operation mode is the MIMO-FTN mode, adjusting a transmission parameter of MIMO-FTN information based on channel measurement information.

Specifically, transmission parameters such as a QAM modulation order and a channel coding rate of information in the antenna port group may be first adjusted based on a measurement result, to ensure quality of information transmission.

Specifically, in a case that the antenna operation mode is the FTN mode, the terminal may measure the antenna port to obtain the antenna measurement information, and adjust the transmission parameter of the FTN information based on the antenna measurement information, and may further indicate the adjusted transmission parameter of the FTN information to the communications peer by using the second indication information. The second indication information is carried in downlink control information (Downlink Control Information, DCI) or dedicated-RRC, or carried in a physical downlink control channel (physical downlink control channel, PDCCH) or a physical downlink shared channel (Physical Downlink Shared Channel, PDSCH).

Specifically, in a case that the antenna operation mode is the MIMO-FTN mode, the transmission parameter of the FTN information may be adjusted based on the antenna port measurement information.

Optionally, the method further includes:

after the number of overlapping layers is re-determined, indicating the re-determined number of overlapping layers to the communications peer by using first indication information; or

after the transmission parameter is adjusted, indicating an adjusted transmission parameter to the communications peer by using second indication information.

Specifically, after the number of overlapping layers is re-determined or the transmission parameter is adjusted, indication may be performed to the communications peer, so that the communications peer performs adjustment adaptively.

Optionally, in a case that the communications device is a network side device, the first indication information and/or the second indication information are carried in DCI or dedicated-RRC, or carried in a PDCCH or a PDSCH.

Specifically, in a case that the communications device is a network side device, the communications peer is a terminal, and the current transmission is downlink transmission. Therefore, the first indication information and/or the second indication information may be carried in DCI or dedicated-RRC, or carried in a PDCCH or a PDSCH.

Optionally, in a case that the communications device is a terminal, the first indication information and/or the second indication information are carried in uplink control information (Uplink Control Information, UCI), or carried in a physical uplink control channel (Physical Uplink Control Channel, PUCCH) or a physical uplink shared channel (Physical Uplink Shared Channel, PUSCH).

Specifically, in a case that the communications device is a terminal, the communications peer is a network side device, and the current transmission is uplink transmission. Therefore, the first indication information and/or the second indication information may be carried in uplink control information UCI, or carried in a PUCCH or a PUSCH.

Optionally, in a case that the communications device is a terminal and the communications peer is a terminal, the first indication information and/or the second indication information are carried in sidelink control signaling or a synchronization message, or carried in a physical sidelink control channel (Physical Sidelink Control Channel, PSCCH), a physical sidelink shared channel (Physical Sidelink Shared Channel, PSSCH) or a sidelink broadcast control channel (Sidelink Broadcast Control Channel, SBCCH).

Specifically, in a case that the communications device is a terminal and the communications peer is a terminal, the current transmission is sidelink transmission. Therefore, the first indication information and/or the second indication information may be carried in sidelink control signaling or a synchronization message, or carried in a PSCCH, a PSSCH, or an SBCCH.

Optionally, the antenna port group is obtained by grouping antenna channels; and the grouping antenna channels includes:

determining the number of antenna port groups and a grouping rule based on the number of overlapping layers; and grouping antenna channels based on the number of antenna port groups and the grouping rule.

Specifically, the number of groups may be determined based on the number of overlapping layers.

Specifically, the antenna channels may be grouped based on the number of antennas after the number of overlapping layers is determined. The grouping rule may be a preset grouping rule or a grouping rule specified in a protocol. To simplify the protocol, antenna channel groups may have several fixed combinations. For example, for $2^N$ antenna channels, the number of groups has fixed [$2^N$, $2^{N-1}$,...,$2^0$] types, respectively corresponding to scenarios in which the number of overlapping layers is [1,2,..., $2^N$]. In a case that the number of groups is $2^N$, only MIMO transmission is performed. In a case that the number of groups is $2^0$, only FTN transmission with N-layer overlapping is performed. When the groups are $2^{N-K}$, FTN transmission with K-layer overlapping is performed, and MIMO precoding and transmission are performed on $2^K$ antenna channels in each group.

In the hybrid solution in this embodiment, an antenna channel grouping manner is determined based on the number of available antennas and the number of FTN overlapping layers required, and an appropriate beamforming manner within an antenna channel grouping is selected, thereby further dynamically optimizing spectral efficiency with respect to the SNR.

Optionally, in a case that the communications device is a network side device, the method further includes: receiving terminal capability information transmitted by a terminal, where the terminal capability information includes information indicating whether the terminal supports an FTN decoding algorithm, and the FTN decoding algorithm includes an uplink FTN decoding algorithm and/or a downlink FTN decoding algorithm.

Specifically, during adaptive mode switching, the multi-antenna system may determine, based on a receiver capability and channel conditions, whether to use the FTN transmission mode, and then may determine, based on a measurement result, the number of overlapping layers supported by a current transmitter/receiver. A triggering and adaption process is as follows:

First, a transmit end may determine whether current transport supports FTN, mainly based on the following two aspects:

a. a user capability, that is, whether a receiver of a user supports an FTN decoding algorithm (LTE reports, to a network side, a capability of whether the LTE supports uplink FTN and downlink FTN); and
b. current channel state information, for example, an SINR of a received signal.

Specifically, in a case that the SINR is less than the first preset threshold, it may be determined that the antenna operation mode is the MIMO mode.

In a case that the SINR is greater than the second preset threshold and it is determined, based on capability information transmitted by the communications peer, that the communications peer supports the FTN decoding algorithm, it may be determined that the antenna operation mode is the FTN mode.

In a case that the SINR is greater than the first preset threshold and less than the second preset threshold and it is determined, based on capability information transmitted by the communications peer, that the communications peer supports the FTN decoding algorithm, it may be determined that the antenna operation mode is the MIMO-FTN mode.

Specifically, the foregoing two types of information, namely, the user capability and the channel state information, may be obtained through user feedback.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

It should be noted that the information transmission method provided in the embodiments of this application may be performed by an information transmission apparatus, or by a control module that is in the information transmission apparatus and that is configured to perform the information transmission method. In the embodiments of this application, an information transmission apparatus provided in the embodiments of this application is described by using an example in which the information transmission apparatus performs the information transmission method.

FIG. 9 is a schematic structural diagram of an information transmission apparatus according to an embodiment of this application. The apparatus is applied to a communications device. As shown in FIG. 9, the apparatus includes a first obtaining module 910, a first determining module 920, and a first transmission module 930.

The first obtaining module 910 is configured to obtain channel quality of a plurality of antenna channels.

The first determining module 920 is configured to determine an antenna operation mode based on the channel quality.

The first transmission module 930 is configured to transmit information in the antenna operation mode.

The antenna operation mode includes: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, where each antenna port group includes at least one antenna channel.

Specifically, after obtaining the channel quality of the plurality of antenna channels by using the first obtaining module, the information transmission apparatus may determine the antenna operation mode based on the channel quality by using the first determining module 920, and finally, transmit the information in the determined antenna operation mode by using the first transmission module 930.

Herein, it should be noted that the apparatus provided in this embodiment of the present invention can implement all the method steps implemented in the embodiment of the information transmission method, with the same technical effects achieved. Therefore, the same part as that in the method embodiment and beneficial effects of this embodiment are not described in detail herein.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

Optionally, the first determining module is specifically configured to perform at least one of the following operations:

in a case that the channel quality is less than or equal to a first threshold, determining that the antenna operation mode is the MIMO mode;
in a case that the channel quality is greater than or equal to a second threshold, determining that the antenna operation mode is the FTN mode; and
in a case that the channel quality is greater than the first threshold and less than the second threshold, determining that the antenna operation mode is the MIMO-FTN mode.

Optionally, the apparatus further includes:

a switching module, configured to switch the antenna operation mode based on updated channel quality; and
a second transmission module, configured to perform transmission in a switched-to antenna operation mode.

Optionally, the channel quality is determined based on a first channel quality parameter, and the first channel quality parameter includes at least one of a signal-to-noise ratio SNR, a signal to interference plus noise ratio SINR, a reference signal received power RSRP, and reference signal received quality RSRQ.

Optionally, in a case that the communications device is a terminal, the first obtaining module is specifically configured to:

receive a downlink reference signal through the plurality of antenna channels; and
measure the downlink reference signal to obtain the channel quality.

Optionally, in a case that the communications device is a terminal and a communications peer is a terminal, the first obtaining module is specifically configured to:

transmit a sidelink reference signal through the plurality of antenna channels; and
receive channel quality fed back by the communications peer, where the channel quality is obtained by the communications peer through measurement based on the sidelink reference signal.

Optionally, in a case that the communications device is a network side device, the first obtaining module is specifically configured to:

transmit a downlink reference signal through the plurality of antenna channels; and
receive channel state information CSI fed back by the terminal to obtain the channel quality, where the CSI is obtained by the terminal through measurement based on the downlink reference signal.

Optionally, in a case that the communications device is a network side device, the first obtaining module is specifically configured to:

receive an uplink reference signal through the plurality of antenna channels; and
measure the uplink reference signal to obtain the channel quality.

Optionally, in a case that the antenna operation mode is the MIMO-FTN mode, the apparatus further includes:

a second determining module, configured to determine the number of overlapping layers in a case that the FTN mode is used for operation between antenna port groups; and
a third determining module, configured to determine a precoding matrix indicator PMI in a case that the MIMO mode is used for operation within an antenna port group, where
the transmission module is specifically configured to:
perform transmission based on the PMI and the number of overlapping layers.

Optionally, the second determining module is specifically configured to:
determine the number of overlapping layers based on the channel quality.
Optionally, the channel quality is determined based on a second channel quality parameter, and the second channel quality parameter includes at least one of the following: an SINR, an RSRP, a multipath quantity, a relative speed, a Doppler frequency shift, a residual frequency offset after frequency offset correction, and a bit error rate.
Optionally, the third determining module is specifically configured to:

obtain channel measurement information of the antenna port group; and
determine the precoding matrix indicator PMI of the antenna port group based on the channel measurement information of the antenna port group.

Optionally, in a case that the communications device is a network side device, the third determining module is further configured to:

transmit a downlink reference signal and measurement trigger signaling to a terminal through the antenna port group;
receive channel state information CSI fed back by the terminal based on the measurement trigger signaling; and
determine the precoding matrix indicator PMI of the antenna port group based on the CSI of the antenna port group, where
the CSI is obtained by the terminal through measurement based on the downlink reference signal, and the measurement trigger signaling includes the number of antenna port groups.

Optionally, in a case that the communications device is a network side device, the third determining module is further configured to:

transmit measurement trigger signaling to a terminal through the antenna port group;
receive an uplink reference signal transmitted by the terminal based on the measurement trigger signaling; and
measure the uplink reference signal to obtain the channel measurement information, where
the measurement trigger signaling includes the number of antenna port groups.

Optionally, in a case that the communications device is a terminal, the third determining module is further configured to:

transmit measurement request signaling to a network side device through the antenna port group;
receive a downlink reference signal transmitted by the network side device based on the measurement request signaling; and
measure the downlink reference signal to obtain the channel measurement information, where
the measurement request signaling includes the number of antenna port groups.

Optionally, in a case that the communications device is a terminal and a communications peer is a terminal, the third determining module is further configured to:

transmit a sidelink reference signal and measurement trigger signaling through the plurality of antenna channels; and
receive channel measurement information fed back by the communications peer based on the measurement trigger signaling, where
the channel measurement information is obtained by the communications peer through measurement based on the sidelink reference signal, and the measurement trigger signaling includes the number of antenna port groups.

Optionally, the transmission module is further configured to:

for an antenna port group, perform digital beamforming on information of an antenna channel in the group based on a corresponding precoding matrix, to obtain MIMO information, where the corresponding precoding matrix is indicated based on the precoding matrix indicator PMI of the antenna port group;
for MIMO information of at least two antenna port groups, perform superposition based on the number of overlapping layers to obtain MIMO-FTN information; and
transmit the MIMO-FTN information.

Optionally, in a case that the antenna operation mode is the FTN mode, the apparatus further includes:

a fourth determining module, configured to determine the number of overlapping layers based on the channel quality, where
the transmission module is specifically configured to:

superpose antenna information based on the number of overlapping layers to obtain FTN information; and
transmit the FTN information.

Optionally, the apparatus further includes:

a fifth determining module, configured to re-determine the number of overlapping layers in a case that a transmission condition is not met, where
the transmission condition includes:

a bit error rate fed back by a communications peer is not less than a first preset threshold; or
the number of received NACK messages transmitted by a communications peer reaches a second preset threshold; or
the number of continuously received NACK messages transmitted by a communications peer reaches a third preset threshold; or
an SNR or an RSRP of a received signal is less than a fourth preset threshold.

Optionally, the apparatus further includes:

a first adjustment module, configured to: in a case that the antenna operation mode is the FTN mode, adjust a transmission parameter of FTN information based on antenna measurement information, where the antenna measurement information is obtained by measuring an antenna port; and
a second adjustment module, configured to: in a case that the antenna operation mode is the MIMO-FTN mode, adjust a transmission parameter of MIMO-FTN information based on channel measurement information.

Optionally, the apparatus further includes:

a first indication module, configured to: after the number of overlapping layers is re-determined, indicate the re-determined number of overlapping layers to the communications peer by using first indication information; or
a second indication module, configured to: after the transmission parameter is adjusted, indicate an adjusted transmission parameter to the communications peer by using second indication information.

Optionally, in a case that the communications device is a network side device, the first indication information and/or the second indication information are carried in DCI or dedicated-RRC, or carried in a PDCCH or a PDSCH.
Optionally, in a case that the communications device is a terminal, the first indication information and/or the second indication information are carried in uplink control information UCI, or carried in a PUCCH or a PUSCH.
Optionally, in a case that the communications device is a terminal and the communications peer is a terminal, the first indication information and/or the second indication information are carried in sidelink control signaling or a synchronization message, or carried in a PSCCH, a PSSCH, or an SBCCH.
Optionally, the antenna port group is obtained by grouping antenna channels; and the grouping antenna channels includes:

determining the number of antenna port groups and a grouping rule based on the number of overlapping layers; and
grouping antenna channels based on the number of antenna port groups and the grouping rule.

Optionally, in a case that the communications device is a network side device, the apparatus further includes:

a receiving module, configured to receive terminal capability information transmitted by a terminal, where the terminal capability information includes information indicating whether the terminal supports an FTN decoding algorithm, and the FTN decoding algorithm includes an uplink FTN decoding algorithm and/or a downlink FTN decoding algorithm.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

The information transmission apparatus in this embodiment of this application may be an apparatus, or may be a component, an integrated circuit, or a chip in a terminal. The apparatus may be a mobile terminal or a non-mobile terminal. For example, the mobile terminal may include but is not limited to the aforementioned types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The information transmission apparatus in this embodiment of this application may be an apparatus with an operating system. The operating system may be an Android (Android) operating system, may be an iOS operating system, or may be another possible operating system. This is not specifically limited in this embodiment of this application.

The information transmission apparatus provided in this embodiment of this application is capable of implementing the processes implemented in the method embodiments of FIG. 1 to FIG. 8, with the same technical effects achieved. To avoid repetition, details are not described herein again.

Optionally, FIG. 10 is a schematic structural diagram of a communications device according to an embodiment of this application. As shown in FIG. 10, the communications device 1000 includes a processor 1001, a memory 1002, and a program or instructions stored in the memory 1002 and capable of running on the processor 1001. For example, in a case that the communications device 1000 is a terminal, when the program or instructions are executed by the processor 1001, the processes of the synchronization signal block transmission method embodiment are implemented, with the same technical effects achieved. In a case that the communications device 1000 is a network side device, when the program or instructions are executed by the processor 1001, the processes of the synchronization signal block transmission method embodiment are implemented, with the same technical effects achieved. To avoid repetition, details are not described herein again.

It may be understood that the communications device in this application may be a network side device, or may be a terminal.

FIG. 11 is a schematic diagram of a hardware structure of a network side device according to an embodiment of this application.

As shown in FIG. 11, the network side device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and transmits the received information to the baseband apparatus 1103 for processing. In a downlink direction, the baseband apparatus 1103 processes to-be-transmitted information, and transmits the information to the radio frequency apparatus 1102; and the radio frequency apparatus 1102 processes the received information and then transmits the information by using the antenna 1101.

The frequency band processing apparatus may be located in the baseband apparatus 1103. The method performed by the network side device in the foregoing embodiments may be implemented by the baseband apparatus 1103, and the baseband apparatus 1103 includes a processor 1104 and a memory 1105.

The baseband apparatus 1103 may include, for example, at least one baseband processing unit, where a plurality of chips are disposed on the baseband processing unit. As shown in FIG. 11, one of the chips is, for example, the processor 1104, and connected to the memory 1105, to invoke the program in the memory 1105 to perform the operations of the network device shown in the foregoing method embodiment.

The baseband apparatus 1103 may further include a network interface 1106, configured to exchange information with the radio frequency apparatus 1102. The interface is, for example, a common public radio interface (common public radio interface, CPRI for short).

Specifically, the network side device in this embodiment of this application further includes instructions or a program stored in the memory 1105 and capable of running on the processor 1104, and the processor 1104 invokes the instructions or program in the memory 1105 to perform the method performed by the modules shown in FIG. 9, with the same technical effects achieved. To avoid repetition, details are not described herein again.

The processor 1104 is configured to: obtain channel quality of a plurality of antenna channels;

determine an antenna operation mode based on the channel quality; and
transmit information in the antenna operation mode, where

the antenna operation mode includes: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, where each antenna port group includes at least one antenna channel.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

Optionally, the processor 1104 is further configured to perform at least one of the following operations:

in a case that the channel quality is less than or equal to a first threshold, determining that the antenna operation mode is the MIMO mode;
in a case that the channel quality is greater than or equal to a second threshold, determining that the antenna operation mode is the FTN mode; and
in a case that the channel quality is greater than the first threshold and less than the second threshold, determining that the antenna operation mode is the MIMO-FTN mode.

Optionally, the processor 1104 is further configured to:

switch the antenna operation mode based on updated channel quality; and
perform transmission in a switched-to antenna operation mode.

Optionally, the channel quality is determined based on a first channel quality parameter, and the first channel quality parameter includes at least one of a signal-to-noise ratio SNR, a signal to interference plus noise ratio SINR, a reference signal received power RSRP, and reference signal received quality RSRQ.

Optionally, in a case that the communications device is a network side device, the processor 1104 is further configured to:

transmit a downlink reference signal through the plurality of antenna channels; and
receive channel state information CSI fed back by the terminal to obtain the channel quality, where the CSI is obtained by the terminal through measurement based on the downlink reference signal.

Optionally, in a case that the communications device is a network side device, the processor 1104 is further configured to:

receive an uplink reference signal through the plurality of antenna channels; and
measure the uplink reference signal to obtain the channel quality.

Optionally, in a case that the antenna operation mode is the MIMO-FTN mode, the processor 1104 is further configured to:

determine the number of overlapping layers in a case that the FTN mode is used for operation between antenna port groups; and
determine a precoding matrix indicator PMI in a case that the MIMO mode is used for operation within an antenna port group, where
the performing transmission in the antenna operation mode includes:
performing transmission based on the PMI and the number of overlapping layers.

Optionally, the processor 1104 is further configured to:
determine the number of overlapping layers based on the channel quality.

Optionally, the channel quality is determined based on a second channel quality parameter, and the second channel quality parameter includes at least one of the following: an SINR, an RSRP, a multipath quantity, a relative speed, a Doppler frequency shift, a residual frequency offset after frequency offset correction, and a bit error rate.

Optionally, the processor 1104 is further configured to:

obtain channel measurement information of the antenna port group; and
determine the precoding matrix indicator PMI of the antenna port group based on the channel measurement information of the antenna port group.

Optionally, in a case that the communications device is a network side device, the processor 1104 is further configured to:

transmit a downlink reference signal and measurement trigger signaling to a terminal through the antenna port group;
receive channel state information CSI fed back by the terminal based on the measurement trigger signaling; and
determine the precoding matrix indicator PMI of the antenna port group based on the CSI of the antenna port group, where
the CSI is obtained by the terminal through measurement based on the downlink reference signal, and the measurement trigger signaling includes the number of antenna port groups.

Optionally, in a case that the communications device is a network side device, the processor 1104 is further configured to:

transmit measurement trigger signaling to a terminal through the antenna port group;
receive an uplink reference signal transmitted by the terminal based on the measurement trigger signaling; and
measure the uplink reference signal to obtain the channel measurement information, where
the measurement trigger signaling includes the number of antenna port groups.

Optionally, the processor 1104 is further configured to:

for an antenna port group, perform digital beamforming on information of an antenna channel in the group based on a corresponding precoding matrix, to obtain MIMO information, where the corresponding precoding matrix is indicated based on the precoding matrix indicator PMI of the antenna port group;
for MIMO information of at least two antenna port groups, perform superposition based on the number of overlapping layers to obtain MIMO-FTN information; and
transmit the MIMO-FTN information.

Optionally, in a case that the antenna operation mode is the FTN mode, the processor 1104 is further configured to:

determine the number of overlapping layers based on the channel quality, where
the performing transmission in the antenna operation mode includes:

superposing antenna information based on the number of overlapping layers to obtain FTN information; and
transmitting the FTN information.

Optionally, the processor 1104 is further configured to:

re-determine the number of overlapping layers in a case that a transmission condition is not met, where
the transmission condition includes:

a bit error rate fed back by a communications peer is not less than a first preset threshold; or
the number of received NACK messages transmitted by a communications peer reaches a second preset threshold; or
the number of continuously received NACK messages transmitted by a communications peer reaches a third preset threshold; or
an SNR or an RSRP of a received signal is less than a fourth preset threshold.

Optionally, the processor 1104 is further configured to:

in a case that the antenna operation mode is the FTN mode, adjust a transmission parameter of FTN information based on antenna measurement information, where the antenna measurement information is obtained by measuring an antenna port; or
in a case that the antenna operation mode is the MIMO-FTN mode, adjust a transmission parameter of MIMO-FTN information based on channel measurement information.

Optionally, the processor 1104 is further configured to:

after the number of overlapping layers is re-determined, indicate the re-determined number of overlapping layers to the communications peer by using first indication information; or
after the transmission parameter is adjusted, indicate an adjusted transmission parameter to the communications peer by using second indication information.

Optionally, in a case that the communications device is a network side device, the first indication information and/or the second indication information are carried in DCI or dedicated-RRC, or carried in a PDCCH or a PDSCH.
Optionally, the antenna port group is obtained by grouping antenna channels; and the processor 1104 is further configured to:

determine the number of antenna port groups and a grouping rule based on the number of overlapping layers; and group antenna channels based on the number of antenna port groups and the grouping rule.

Optionally, in a case that the communications device is a network side device, the processor 1104 is further configured to:
receive terminal capability information transmitted by a terminal, where the terminal capability information includes information indicating whether the terminal supports an FTN decoding algorithm, and the FTN decoding algorithm includes an uplink FTN decoding algorithm and/or a downlink FTN decoding algorithm.
In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.
FIG. 12 is a schematic diagram of a hardware structure of a terminal according to an embodiment of this application.
The terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.
Persons skilled in the art can understand that the terminal 1200 may further include a power supply (for example, a battery) that supplies power to each component. The power supply may be logically connected to the processor 1210 by using a power management system, to implement functions such as charging management, discharging management, and power consumption management by using the power management system. The terminal structure shown in FIG. 12 does not constitute a limitation on the terminal. The terminal may include more or fewer components than those shown in the figure, or some components may be combined, or there may be a different component layout. Details are not described herein again
It should be understood that, in this embodiment of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in a video capture mode or an image capture mode. The display unit 1206 may include the display panel 12061. The display panel 12061 may be configured in a form of a liquid crystal display, an organic light-emitting diode, or the like. The user input unit 1207 includes a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or an on/off key), a trackball, a mouse, and a joystick. Details are not described herein.
In this embodiment of this application, the radio frequency unit 1201 receives information from a communications peer and then transmits the information to the processor 1210 for processing; and transmits to-be-transmitted information to a network side device. Usually, the radio frequency unit 1201 includes but is not limited to an antenna, at least one amplifier, a transceiver, a coupler, a low noise amplifier, a duplexer, and the like.
The memory 1209 may be configured to store software programs or instructions and various data. The memory 1209 may mainly include a program or instruction storage region and a data storage region. The program or instruction storage region may store an operating system, an application program or instructions required by at least one function (for example, an audio play function or an image play function), and the like. In addition, the memory 1209 may include a high-speed random access memory, or may include a non-volatile memory, where the non-volatile memory may be a read-only memory (Read-Only Memory, ROM), a programmable read-only memory (Programmable ROM, PROM), an erasable programmable read-only memory(Erasable PROM, EPROM), an electrically erasable programmable read-only memory (Electrically EPROM, EEPROM), or a flash memory, for example, at least one magnetic disk storage device, a flash memory, or another non-volatile solid-state storage device.

The processor 1210 may include one or more processing units. Optionally, the processor 1210 may integrate an application processor and a modem processor. The application processor mainly processes an operating system, a user interface, an application program or instructions, and the like. The modem processor mainly processes wireless communication, for example, a baseband processor. It may be understood that the modem processor may alternatively not be integrated in the processor 1210.

The processor 1210 is configured to: obtain channel quality of a plurality of antenna channels;

determine an antenna operation mode based on the channel quality; and
transmit information in the antenna operation mode, where
the antenna operation mode includes: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, where each antenna port group includes at least one antenna channel.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

Optionally, the processor 1210 is further configured to perform at least one of the following operations:

in a case that the channel quality is less than or equal to a first threshold, determining that the antenna operation mode is the MIMO mode;
in a case that the channel quality is greater than or equal to a second threshold, determining that the antenna operation mode is the FTN mode; and
in a case that the channel quality is greater than the first threshold and less than the second threshold, determining that the antenna operation mode is the MIMO-FTN mode.

Optionally, the processor 1210 is further configured to:

switch the antenna operation mode based on updated channel quality; and
perform transmission in a switched-to antenna operation mode.

Optionally, the channel quality is determined based on a first channel quality parameter, and the first channel quality parameter includes at least one of a signal-to-noise ratio SNR, a signal to interference plus noise ratio SINR, a reference signal received power RSRP, and reference signal received quality RSRQ.

Optionally, in a case that the communications device is a terminal, the processor 1210 is further configured to:

receive a downlink reference signal through the plurality of antenna channels; and
measure the downlink reference signal to obtain the channel quality.

Optionally, in a case that the communications device is a terminal and a communications peer is a terminal, the processor 1210 is further configured to:

transmit a sidelink reference signal through the plurality of antenna channels; and
receive channel quality fed back by the communications peer, where the channel quality is obtained by the communications peer through measurement based on the sidelink reference signal.

Optionally, in a case that the antenna operation mode is the MIMO-FTN mode, the processor 1210 is further configured to:

determine the number of overlapping layers in a case that the FTN mode is used for operation between antenna port groups; and
determine a precoding matrix indicator PMI in a case that the MIMO mode is used for operation within an antenna port group, where

the performing transmission in the antenna operation mode includes:
performing transmission based on the PMI and the number of overlapping layers.

Optionally, the processor 1210 is further configured to:
determine the number of overlapping layers based on the channel quality.

Optionally, the channel quality is determined based on a second channel quality parameter, and the second channel quality parameter includes at least one of the following: an SINR, an RSRP, a multipath quantity, a relative speed, a Doppler frequency shift, a residual frequency offset after frequency offset correction, and a bit error rate.

Optionally, the processor 1210 is further configured to:

obtain channel measurement information of the antenna port group; and
determine the precoding matrix indicator PMI of the antenna port group based on the channel measurement information of the antenna port group.

Optionally, in a case that the communications device is a terminal, the processor 1210 is further configured to:

transmit measurement request signaling to a network side device through the antenna port group;
receive a downlink reference signal transmitted by the network side device based on the measurement request signaling; and
measure the downlink reference signal to obtain the channel measurement information, where
the measurement request signaling includes the number of antenna port groups.

Optionally, in a case that the communications device is a terminal and a communications peer is a terminal, the processor 1210 is further configured to:

transmit a sidelink reference signal and measurement trigger signaling through the plurality of antenna channels; and
receive channel measurement information fed back by the communications peer based on the measurement trigger signaling, where
the channel measurement information is obtained by the communications peer through measurement based on the sidelink reference signal, and the measurement trigger signaling includes the number of antenna port groups.

Optionally, the processor 1210 is further configured to:

for an antenna port group, perform digital beamforming on information of an antenna channel in the group based on a corresponding precoding matrix, to obtain MIMO information, where the corresponding precoding matrix is indicated based on the precoding matrix indicator PMI of the antenna port group;
for MIMO information of at least two antenna port groups, perform superposition based on the number of overlapping layers to obtain MIMO-FTN information; and
transmit the MIMO-FTN information.

Optionally, in a case that the antenna operation mode is the FTN mode, the processor 1210 is further configured to:

determine the number of overlapping layers based on the channel quality, where
the performing transmission in the antenna operation mode includes:

superposing antenna information based on the number of overlapping layers to obtain FTN information; and
transmitting the FTN information.

Optionally, the processor 1210 is further configured to:

re-determine the number of overlapping layers in a case that a transmission condition is not met, where
the transmission condition includes:

a bit error rate fed back by a communications peer is not less than a first preset threshold; or
the number of received NACK messages transmitted by a communications peer reaches a second preset threshold; or

the number of continuously received NACK messages transmitted by a communications peer reaches a third preset threshold; or

an SNR or an RSRP of a received signal is less than a fourth preset threshold.

Optionally, the processor 1210 is further configured to:

in a case that the antenna operation mode is the FTN mode, adjust a transmission parameter of FTN information based on antenna measurement information, where the antenna measurement information is obtained by measuring an antenna port; or

in a case that the antenna operation mode is the MIMO-FTN mode, adjust a transmission parameter of MIMO-FTN information based on channel measurement information.

Optionally, the processor 1210 is further configured to:

after the number of overlapping layers is re-determined, indicate the re-determined number of overlapping layers to the communications peer by using first indication information; or

after the transmission parameter is adjusted, indicate an adjusted transmission parameter to the communications peer by using second indication information.

Optionally, in a case that the communications device is a terminal, the first indication information and/or the second indication information are carried in uplink control information UCI, or carried in a PUCCH or a PUSCH.

Optionally, in a case that the communications device is a terminal and the communications peer is a terminal, the first indication information and/or the second indication information are carried in sidelink control signaling or a synchronization message, or carried in a PSCCH, a PSSCH, or an SBCCH.

Optionally, the antenna port group is obtained by grouping antenna channels; and the processor 1210 is further configured to:

determine the number of antenna port groups and a grouping rule based on the number of overlapping layers; and group antenna channels based on the number of antenna port groups and the grouping rule.

In this embodiment of this application, an antenna operation mode is determined based on channel state information, and information is transmitted. During information transmission, an appropriate transmission mode can be adaptively selected based on a channel state for transmission, and an operation mode of a multi-antenna system can be flexibly adjusted, thereby dynamically optimizing spectral efficiency based on the channel state, and helping a receiver track a time-varying characteristic of a fading channel and remain in the best operation state.

An embodiment of this application further provides a readable storage medium. The readable storage medium stores a program or instructions. When the program or instructions are executed by a processor, the processes of the information transmission method embodiment are implemented, with the same technical effects achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to run a program or instructions for a network side device, to implement the processes of the information transmission method embodiment, with the same technical effects achieved. To avoid repetition, details are not described herein again.

It should be understood that the chip provided in this embodiment of this application may also be referred to as a system-level chip, a system on chip, a chip system, a system-on-a-chip, or the like.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary common hardware platform, and certainly may be alternatively implemented by using hardware. However, in most cases, the former is a preferred implementation. Based on such an understanding, the technical solutions of this application essentially or the part contributing to the prior art may be implemented in a form of a software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from principles of this application and the protection scope of the claims, and all such manners fall within the protection scope of this application.

## Claims

**1.** An information transmission method, applied to a communications device, wherein the method comprises:

obtaining channel quality of a plurality of antenna channels;
determining an antenna operation mode based on the channel quality; and
transmitting information in the antenna operation mode, wherein
the antenna operation mode comprises: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, wherein each antenna port group comprises at least one antenna channel.

**2.** The information transmission method according to claim 1, wherein the determining an antenna operation mode based on the channel quality comprises at least one of the following:

in a case that the channel quality is less than or equal to a first threshold, determining that the antenna operation mode is the MIMO mode;
in a case that the channel quality is greater than or equal to a second threshold, determining that the antenna operation mode is the FTN mode; and
in a case that the channel quality is greater than the first threshold and less than the second threshold, determining that the antenna operation mode is the MIMO-FTN mode.

**3.** The information transmission method according to claim 1, wherein after the determining an antenna operation mode based on the channel quality, the method further comprises:

switching the antenna operation mode based on updated channel quality; and
performing transmission in a switched-to antenna operation mode.

**4.** The information transmission method according to claim 2 or 3, the channel quality is determined based on a first channel quality parameter, and the first channel quality parameter comprises at least one of a signal-to-noise ratio SNR, a signal to interference plus noise ratio SINR, a reference signal received power RSRP, and reference signal received quality RSRQ.

**5.** The information transmission method according to claim 1, wherein in a case that the communications device is a terminal, the obtaining channel quality of a plurality of antenna channels comprises:

receiving a downlink reference signal through the plurality of antenna channels; and
measuring the downlink reference signal to obtain the channel quality.

**6.** The information transmission method according to claim 1, wherein in a case that the communications device is a terminal and a communications peer is a terminal, the obtaining channel quality of a plurality of antenna channels comprises:

transmitting a sidelink reference signal through the plurality of antenna channels; and
receiving channel quality fed back by the communications peer, wherein the channel quality is obtained by the communications peer through measurement based on the sidelink reference signal.

**7.** The information transmission method according to claim 1, wherein in a case that the communications device is a network side device, the obtaining channel quality of a plurality of antenna channels comprises:

transmitting a downlink reference signal through the plurality of antenna channels; and
receiving channel state information CSI fed back by a terminal to obtain the channel quality, wherein the CSI is obtained by the terminal through measurement based on the downlink reference signal.

**8.** The information transmission method according to claim 1, wherein in a case that the communications device is a network side device, the obtaining channel quality of a plurality of antenna channels comprises:

receiving an uplink reference signal through the plurality of antenna channels; and
measuring the uplink reference signal to obtain the channel quality.

**9.** The information transmission method according to claim 1, wherein in a case that the antenna operation mode is the MIMO-FTN mode, the method further comprises:

determining the number of overlapping layers in a case that the FTN mode is used for operation between antenna port groups; and
determining a precoding matrix indicator PMI in a case that the MIMO mode is used for operation within an antenna port group, wherein
the performing transmission in the antenna operation mode comprises:
performing transmission based on the PMI and the number of overlapping layers.

**10.** The information transmission method according to claim 9, wherein the determining the number of overlapping layers in a case that the FTN mode is used for operation between antenna port groups comprises:
determining the number of overlapping layers based on the channel quality.

**11.** The information transmission method according to claim 10, wherein the channel quality is determined based on a second channel quality parameter, and the second channel quality parameter comprises at least one of the following: an SINR, an RSRP, a multipath quantity, a relative speed, a Doppler frequency shift, a residual frequency offset after frequency offset correction, and a bit error rate.

**12.** The information transmission method according to claim 9, wherein the determining a precoding matrix indicator PMI in a case that the MIMO mode is used for operation within an antenna port group comprises:

obtaining channel measurement information of the antenna port group; and
determining the precoding matrix indicator PMI of the antenna port group based on the channel measurement information of the antenna port group.

**13.** The information transmission method according to claim 12, wherein in a case that the communications device is a network side device, the determining the precoding matrix indicator PMI of the antenna port group based on the channel measurement information of the antenna port group comprises:

transmitting a downlink reference signal and measurement trigger signaling to a terminal through the antenna port group;
receiving channel state information CSI fed back by the terminal based on the measurement trigger signaling; and
determining the precoding matrix indicator PMI of the antenna port group based on the CSI of the antenna port group, wherein
the CSI is obtained by the terminal through measurement based on the downlink reference signal, and the measurement trigger signaling comprises the number of antenna port groups.

**14.** The information transmission method according to claim 12, wherein in a case that the communications device is a network side device, the obtaining channel measurement information of the antenna port group comprises:

transmitting measurement trigger signaling to a terminal through the antenna port group;
receiving an uplink reference signal transmitted by the terminal based on the measurement trigger signaling; and
measuring the uplink reference signal to obtain the channel measurement information, wherein
the measurement trigger signaling comprises the number of antenna port groups.

**15.** The information transmission method according to claim 12, wherein in a case that the communications device is a terminal, the obtaining channel measurement information of the antenna port group comprises:

transmitting measurement request signaling to a network side device through the antenna port group;
receiving a downlink reference signal transmitted by the network side device based on the measurement request signaling; and
measuring the downlink reference signal to obtain the channel measurement information, wherein
the measurement request signaling comprises the number of antenna port groups.

**16.** The information transmission method according to claim 12, wherein in a case that the communications device is a terminal and a communications peer is a terminal, the obtaining channel measurement information of the antenna port group comprises:

transmitting a sidelink reference signal and measurement trigger signaling through the plurality of antenna channels; and
receiving channel measurement information fed back by the communications peer based on the measurement trigger signaling, wherein
the channel measurement information is obtained by the communications peer through measurement based on the sidelink reference signal, and the measurement trigger signaling comprises the number of antenna port groups.

**17.** The information transmission method according to claim 9, wherein the performing transmission based on the PMI and the number of overlapping layers comprises:

for an antenna port group, performing digital beamforming on information of an antenna channel in the group based on a corresponding precoding matrix, to obtain MIMO information, wherein the corresponding precoding matrix is indicated based on the precoding matrix indicator PMI of the antenna port group;
for MIMO information of at least two antenna port groups, performing superposition based on the number of overlapping layers to obtain MIMO-FTN information; and
transmitting the MIMO-FTN information.

**18.** The information transmission method according to claim 1, wherein in a case that the antenna operation mode is the FTN mode, the method further comprises:

determining the number of overlapping layers based on the channel quality, wherein
the performing transmission in the antenna operation mode comprises:

superposing antenna information based on the number of overlapping layers to obtain FTN information; and
transmitting the FTN information.

**19.** The information transmission method according to claim 10 or 18, wherein the method further comprises:

re-determining the number of overlapping layers in a case that a transmission condition is not met, wherein
the transmission condition comprises:

a bit error rate fed back by a communications peer is not less than a first preset threshold; or
the number of received NACK messages transmitted by a communications peer reaches a second preset threshold; or
the number of continuously received NACK messages transmitted by a communications peer reaches a third preset threshold; or
an SNR or an RSRP of a received signal is less than a fourth preset threshold.

**20.** The information transmission method according to claim 19, wherein the method further comprises:

in a case that the antenna operation mode is the FTN mode, adjusting a transmission parameter of FTN information based on antenna measurement information, wherein the antenna measurement information is obtained by measuring an antenna port; or
in a case that the antenna operation mode is the MIMO-FTN mode, adjusting a transmission parameter of MIMO-FTN information based on channel measurement information.

**21.** The information transmission method according to claim 20, wherein the method further comprises:

after the number of overlapping layers is re-determined, indicating the re-determined number of overlapping layers to the communications peer by using first indication information; or
after the transmission parameter is adjusted, indicating an adjusted transmission parameter to the communications peer by using second indication information.

**22.** The information transmission method according to claim 21, wherein in a case that the communications device is a network side device, the first indication information and/or the second indication information are carried in downlink control information DCI or dedicatedradio resource control dedicated-RRC, or carried in a physical downlink control channel PDCCH or a physical downlink shared channel PDSCH.

**23.** The information transmission method according to claim 21, wherein a case that the communications device is a terminal, the first indication information and/or the second indication information are carried in uplink control information UCI, or carried in a physical uplink control channel PUCCH or a physical uplink shared channel PUSCH.

**24.** The information transmission method according to claim 21, wherein in a case that the communications device is a terminal and the communications peer is a terminal, the first indication information and/or the second indication information are carried in sidelink control signaling or a synchronization message, or carried in a physical sidelink control channel PSCCH, a physical sidelink shared channel PSSCH, or a sidelink broadcast control channel SBCCH.

**25.** The information transmission method according to claim 1, wherein the antenna port group is obtained by grouping antenna channels; and
the grouping antenna channels comprises:

determining the number of antenna port groups and a grouping rule based on the number of overlapping layers; and
grouping antenna channels based on the number of antenna port groups and the grouping rule.

**26.** The information transmission method according to claim 2, wherein in a case that the communications device is a network side device, the method further comprises:
receiving terminal capability information transmitted by a terminal, wherein the terminal capability information comprises information indicating whether the terminal supports an FTN decoding algorithm, and the FTN decoding algorithm comprises an uplink FTN decoding algorithm and/or a downlink FTN decoding algorithm.

**27.** An information transmission apparatus, applied to a communications device, wherein the apparatus comprises:

a first obtaining module, configured to obtain channel quality of a plurality of antenna channels;
a first determining module, configured to determine an antenna operation mode based on the channel quality; and
a first transmission module, configured to transmit information in the antenna operation mode, wherein
the antenna operation mode comprises: a multiple-input multiple-output MIMO mode in which all the plurality of antenna channels operate in a MIMO manner, a Faster-than-Nyquist FTN mode in which all the plurality of antenna channels operate in an FTN manner, or a MIMO-FTN mode in which the same antenna port group in the plurality of antenna channels operates in a MIMO precoding manner and different antenna port groups operate in an FTN manner, wherein each antenna port group comprises at least one antenna channel.

**28.** The information transmission apparatus according to claim 27, wherein the first determining module is specifically configured to perform at least one of the following operations:

in a case that the channel quality is less than or equal to a first threshold, determining that the antenna operation mode is the MIMO mode;
in a case that the channel quality is greater than or equal to a second threshold, determining that the antenna operation mode is the FTN mode; and
in a case that the channel quality is greater than the first threshold and less than the second threshold, determining that the antenna operation mode is the MIMO-FTN mode.

**29.** The information transmission apparatus according to claim 27, further comprising:

a switching module, configured to switch the antenna operation mode based on updated channel quality; and
a second transmission module, configured to perform transmission in a switched-to antenna operation mode.

**30.** The information transmission apparatus according to claim 27, wherein in a case that the communications device is a terminal, the first obtaining module is specifically configured to:

receive a downlink reference signal through the plurality of antenna channels; and
measure the downlink reference signal to obtain the channel quality.

**31.** The information transmission apparatus according to claim 27, wherein in a case that the communications device is a terminal and a communications peer is a terminal, the first obtaining module is specifically configured to:

transmit a sidelink reference signal through the plurality of antenna channels; and
receive channel quality fed back by the communications peer, wherein the channel quality is obtained by the communications peer through measurement based on the sidelink reference signal.

**32.** The information transmission apparatus according to claim 27, wherein in a case that the communications device is a network side device, the first obtaining module is specifically configured to:

transmit a downlink reference signal through the plurality of antenna channels; and
receive channel state information CSI fed back by the terminal to obtain the channel quality, wherein the CSI is obtained by the terminal through measurement based on the downlink reference signal.

**33.** The information transmission apparatus according to claim 27, wherein in a case that the communications device is a network side device, the first obtaining module is specifically configured to:

receive an uplink reference signal through the plurality of antenna channels; and
measure the uplink reference signal to obtain the channel quality.

**34.** The information transmission apparatus according to claim 27, wherein in a case that the antenna operation mode is the MIMO-FTN mode, the apparatus further comprises:

a second determining module, configured to determine the number of overlapping layers in a case that the FTN mode is used for operation between antenna port groups; and
a third determining module, configured to determine a precoding matrix indicator PMI in a case that the MIMO mode is used for operation within an antenna port group, wherein
the transmission module is specifically configured to:
perform transmission based on the PMI and the number of overlapping layers.

**35.** The information transmission apparatus according to claim 34, wherein the second determining module is specifically configured to:
determine the number of overlapping layers based on the channel quality.

**36.** The information transmission method according to claim 34, wherein the third determining module is specifically configured to:

obtain channel measurement information of the antenna port group; and
determine the precoding matrix indicator PMI of the antenna port group based on the channel measurement information of the antenna port group.

**37.** The information transmission apparatus according to claim 34, wherein the transmission module is further configured to:

for an antenna port group, perform digital beamforming on information of an antenna channel in the group based on a corresponding precoding matrix, to obtain MIMO information, wherein the corresponding precoding matrix is indicated based on the precoding matrix indicator PMI of the antenna port group;
for MIMO information of at least two antenna port groups, perform superposition based on the number of overlapping layers to obtain MIMO-FTN information; and
transmit the MIMO-FTN information.

**38.** The information transmission apparatus according to claim 27, wherein in a case that the antenna operation mode is the FTN mode, the apparatus further comprises:

a fourth determining module, configured to determine the number of overlapping layers based on the channel quality, wherein
the transmission module is specifically configured to:

superpose antenna information based on the number of overlapping layers to obtain FTN information; and
transmit the FTN information.

**39.** The information transmission apparatus according to claim 35 or 38, wherein the apparatus further comprises:

a fifth determining module, configured to re-determine the number of overlapping layers in a case that a transmission condition is not met, wherein
the transmission condition comprises:

a bit error rate fed back by a communications peer is not less than a first preset threshold; or
the number of received NACK messages transmitted by a communications peer reaches a second preset threshold; or
the number of continuously received NACK messages transmitted by a communications peer reaches a third preset threshold; or
an SNR or an RSRP of a received signal is less than a fourth preset threshold.

**40.** The information transmission apparatus according to claim 39, wherein the apparatus further comprises:

a first adjustment module, configured to: in a case that the antenna operation mode is the FTN mode, adjust a transmission parameter of FTN information based on antenna measurement information, wherein the antenna measurement information is obtained by measuring an antenna port; and
a second adjustment module, configured to: in a case that the antenna operation mode is the MIMO-FTN mode, adjust a transmission parameter of MIMO-FTN information based on channel measurement information.

**41.** The information transmission apparatus according to claim 27, wherein the antenna port group is obtained by grouping antenna channels; and
the grouping antenna channels comprises:

determining the number of antenna port groups and a grouping rule based on the number of overlapping layers; and
grouping antenna channels based on the number of antenna port groups and the grouping rule.

**42.** The information transmission apparatus according to claim 28, wherein in a case that the communications device is a network side device, the apparatus further comprises:
a receiving module, configured to receive terminal capability information transmitted by a terminal, wherein the terminal capability information comprises information indicating whether the terminal supports an FTN decoding algorithm, and the FTN decoding algorithm comprises an uplink FTN decoding algorithm and/or a downlink FTN decoding algorithm.

**43.** A communications device, comprising a processor, a memory, and a program or instructions stored in the memory and capable of running on the processor, wherein when the program or instructions are executed by the processor, the steps of the information transmission method according to any one of claims 1 to 26 are implemented.

**44.** A readable storage medium, wherein the readable storage medium stores a program or instructions, and when the program or instructions are executed by a processor, the steps of the information transmission method according to any one of claims 1 to 26 are implemented.

**45.** An information transmission apparatus, wherein the apparatus is configured to perform the information transmission method according to any one of claims 1 to 26.

**46.** A chip, wherein the chip comprises a processor and a communications interface, the communications interface is coupled to the processor, and the processor is configured to run a program or instructions to implement the information transmission method according to any one of claims 1 to 26.

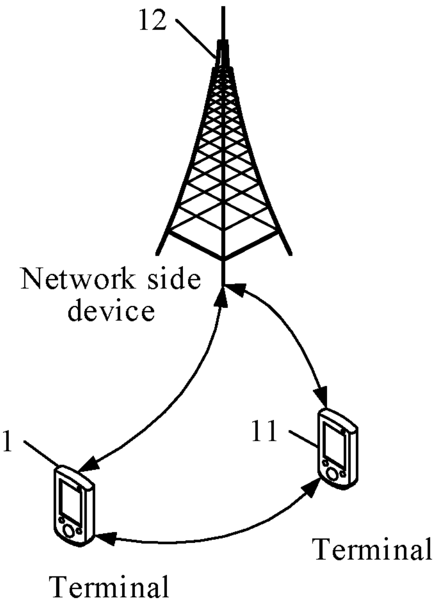
12
Network side
device
11
11
Terminal
Terminal

FIG. 1

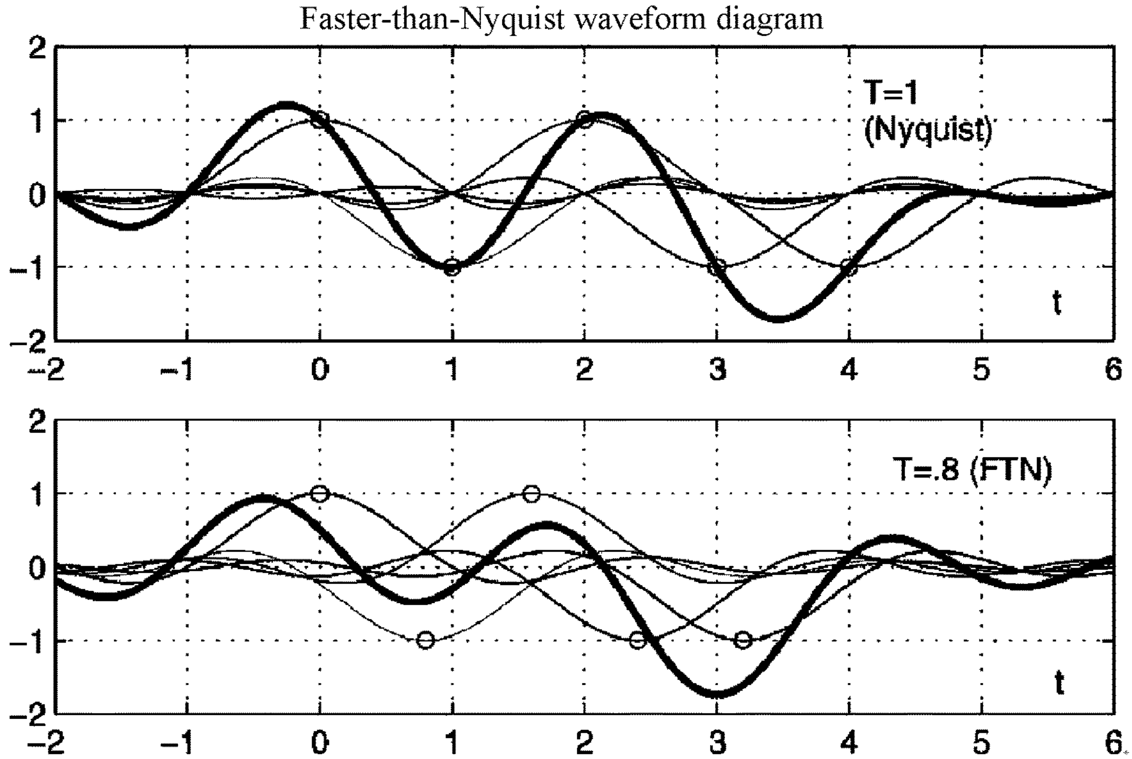
Faster-than-Nyquist waveform diagram
T=1
(Nyquist)
t
T=.8 (FTN)
t
2
1
0
−1
−2
−2
−1
0
1
2
3
4
5
6

FIG. 2

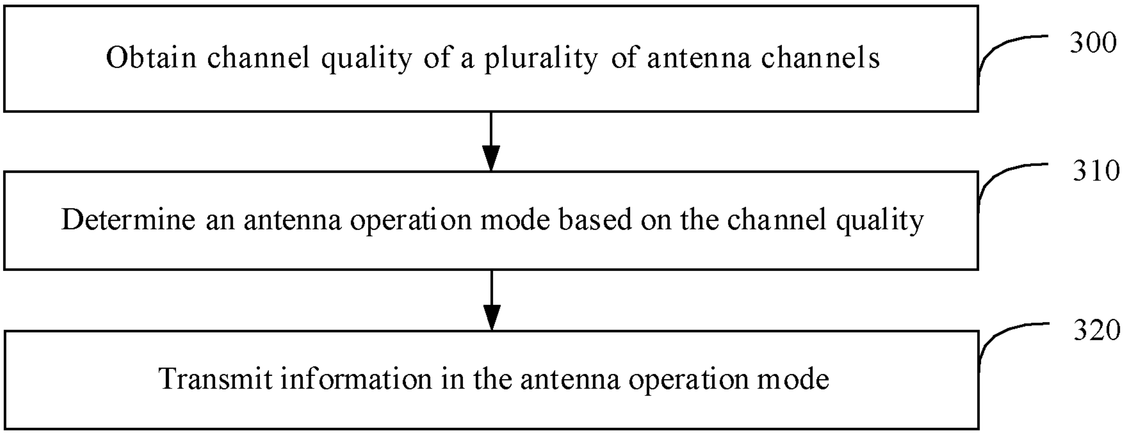
Obtain channel quality of a plurality of antenna channels
300
Determine an antenna operation mode based on the channel quality
310
Transmit information in the antenna operation mode
320

FIG. 3

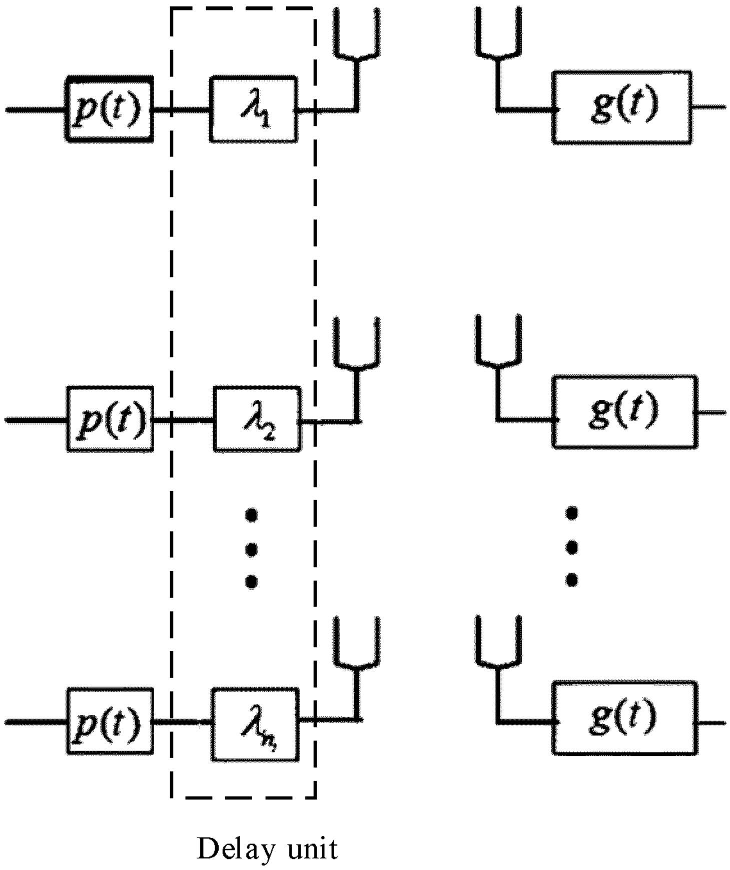
p(t)
λ1
g(t)
p(t)
λ2
g(t)
p(t)
λn
g(t)
Delay unit

FIG. 4

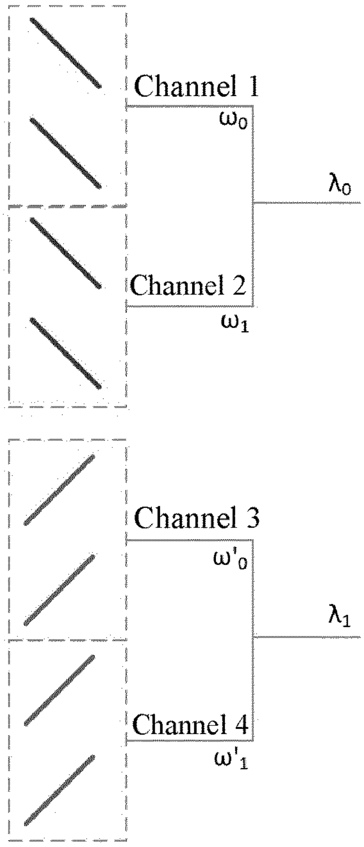
Channel 1
$\omega_0$
$\lambda_0$
Channel 2
$\omega_1$
Channel 3
$\omega'_0$
$\lambda_1$
Channel 4
$\omega'_1$

FIG. 5

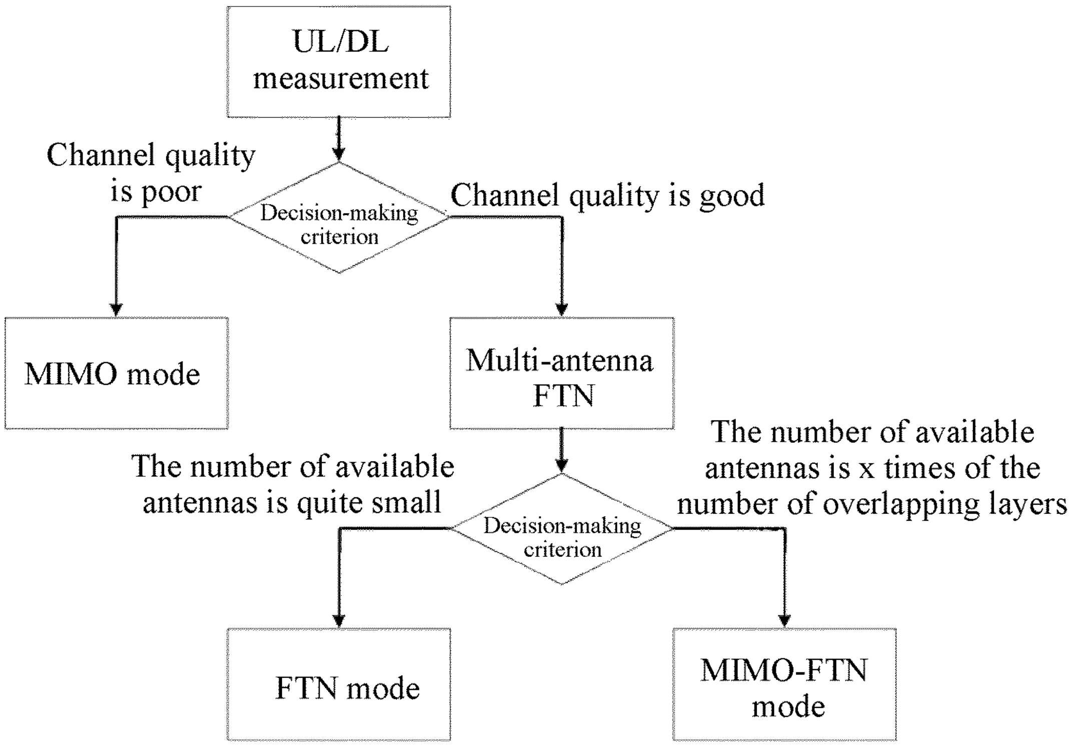
UL/DL measurement
Channel quality is poor
Decision-making criterion
Channel quality is good
MIMO mode
Multi-antenna FTN
The number of available antennas is quite small
Decision-making criterion
The number of available antennas is x times of the number of overlapping layers
FTN mode
MIMO-FTN mode

FIG. 6

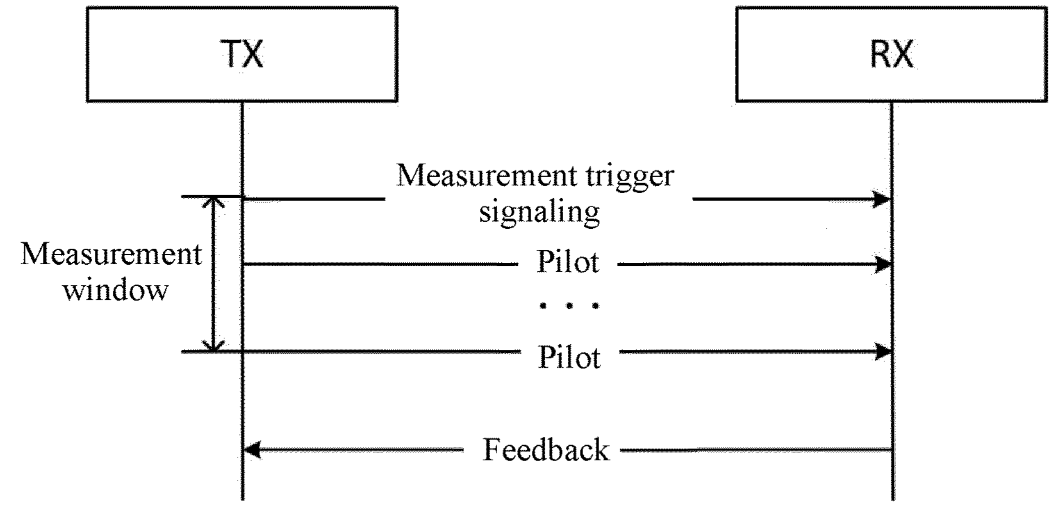


FIG. 7

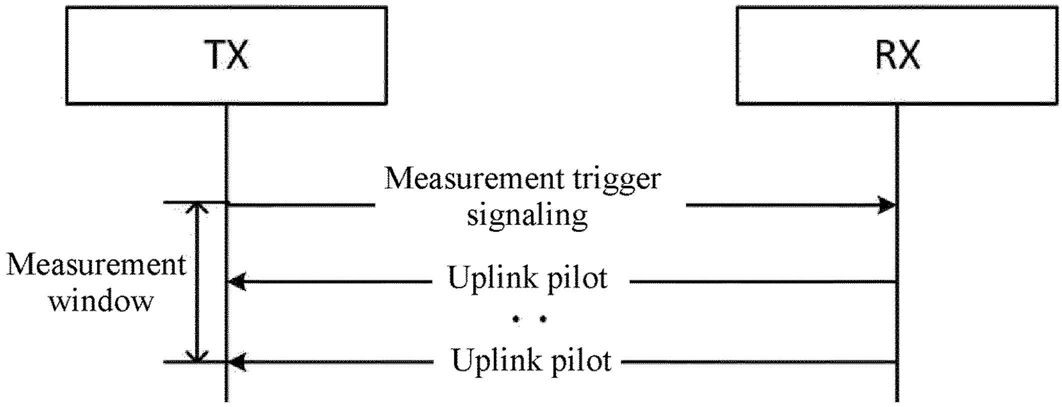


FIG. 8

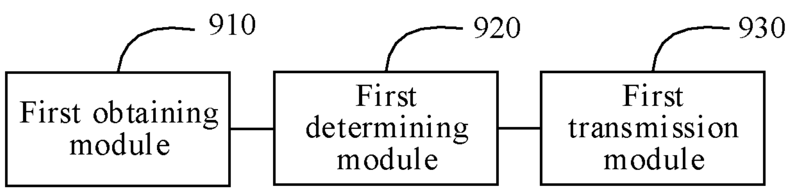


FIG. 9

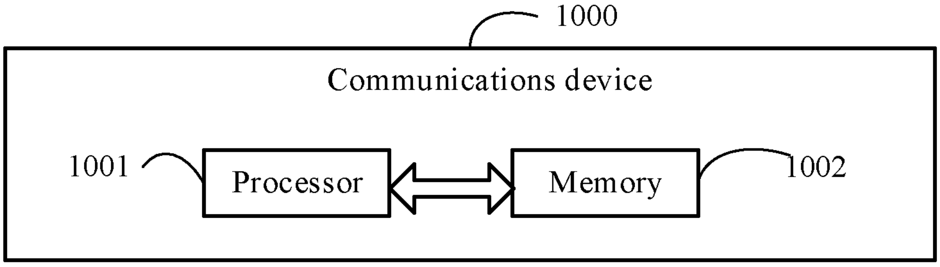


FIG. 10

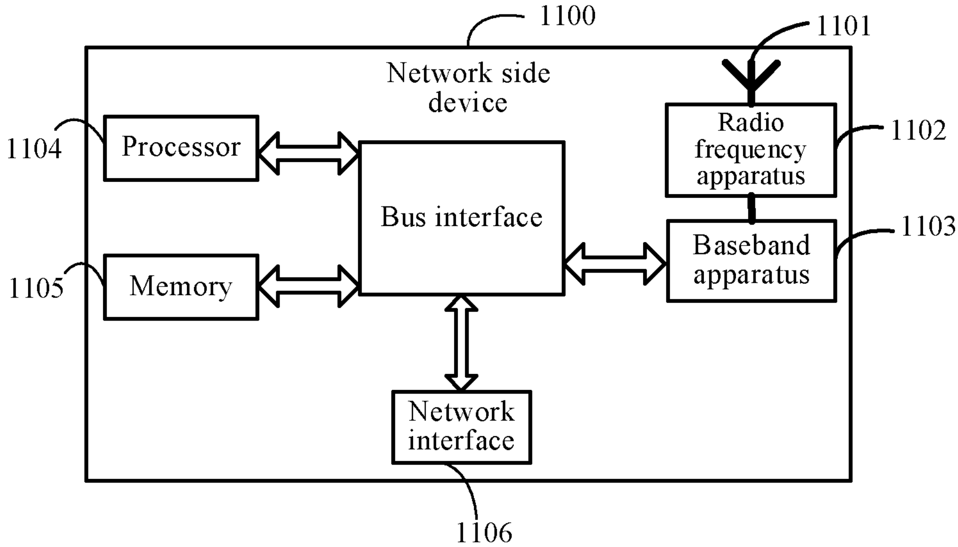
1100
1101
Network side device
Radio frequency apparatus
1102
1104
Processor
Bus interface
Baseband apparatus
1103
1105
Memory
Network interface
1106

FIG. 11

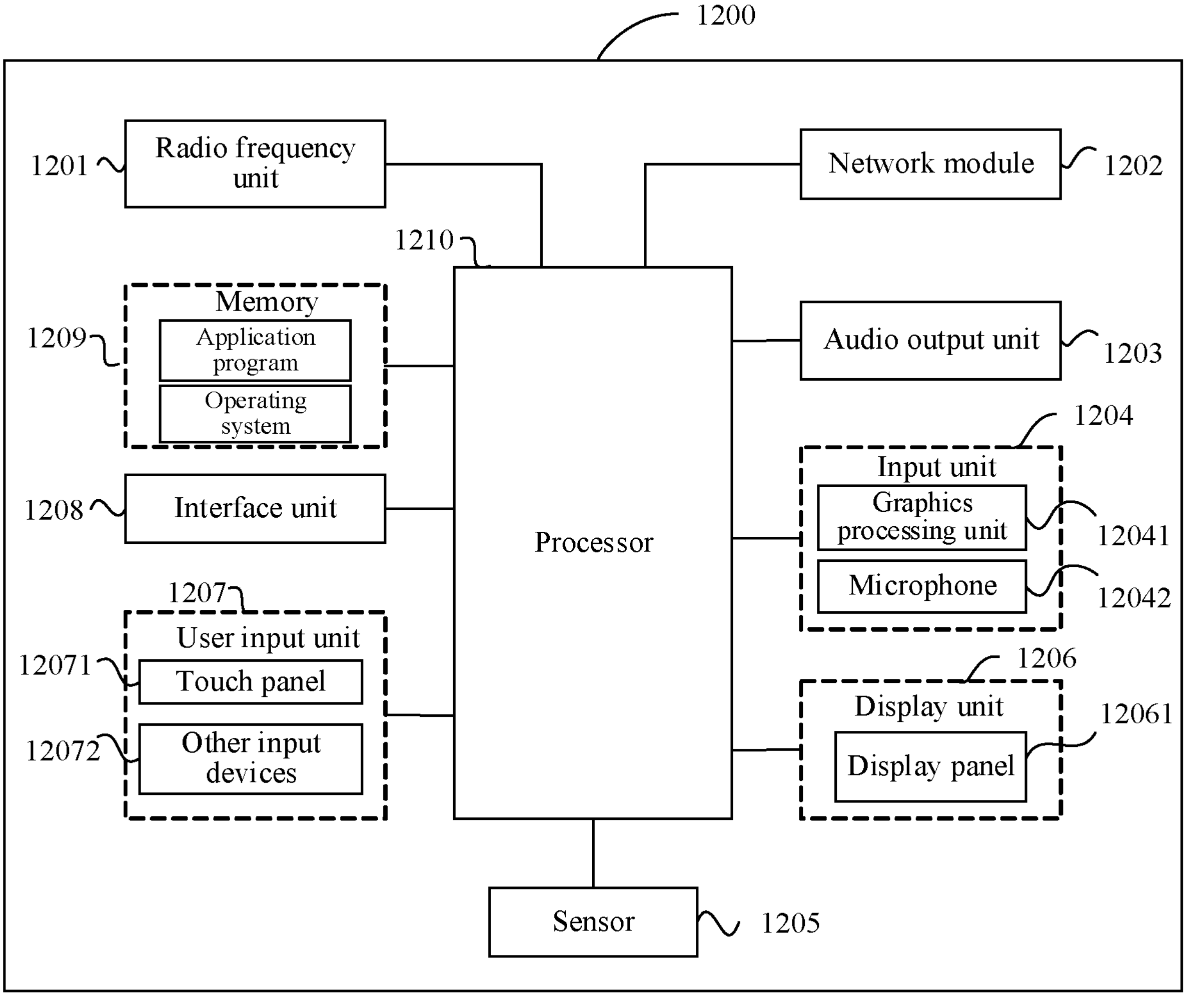
1200
1201
Radio frequency unit
Network module
1202
1210
Memory
Application program
Operating system
1209
Audio output unit
1203
1204
Input unit
Graphics processing unit
12041
1208
Interface unit
Processor
Microphone
12042
1207
User input unit
12071
Touch panel
1206
Display unit
12061
12072
Other input devices
Display panel
Sensor
1205

FIG. 12

## INTERNATIONAL SEARCH REPORT

International application No.
**PCT/CN2021/131837**

**A. CLASSIFICATION OF SUBJECT MATTER**

H04B 7/0413(2017.01)i; H04B 7/0456(2017.01)i; H04B 7/06(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI; VEN; EPTXT; WOTXT; USTXT; 3GPP: 超, 快, 奈奎斯特, 信道质量, 信道状态, 信道状况, 信噪比, 信干噪比, 天线端口, 切换, 模式, MIMO-FTN, MIMO, faster-than-Nyquist, FTN, switch, ofdm, SNR, SINR, OVTDM, CSI, ISI, ICI, FTN/OVTDM

**C. DOCUMENTS CONSIDERED TO BE RELEVANT**

| Category* | Citation of document, with indication, where appropriate, of the relevant passages | Relevant to claim No. |
|---|---|---|
| A | US 2017078061 A1 (NTT DOCOMO INC.) 16 March 2017 (2017-03-16)<br>abstract, description, paragraphs [0005]-[0178] | 1-46 |
| A | CN 105493460 A (INTERDIGITAL PATENT HOLDINGS, INC.) 13 April 2016 (2016-04-13)<br>entire document | 1-46 |
| A | PANASONIC. "Considerations on Waveform Design for New Radio Interface" *3GPP TSG RAN WG1 Meeting #84bis R1-162551,* 01 April 2016 (2016-04-01),<br>entire document | 1-46 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 January 2022** | **27 January 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/131837**

| Patent document cited in search report | Publication date (day/month/year) | Patent family member(s) | Publication date (day/month/year) |
|---|---|---|---|
| US 2017078061 A1 | 16 March 2017 | JP 2015164257 A | 10 September 2015 |
| | | JP 6254019 B2 | 27 December 2017 |
| | | US 10177887 B2 | 08 January 2019 |
| | | WO 2015129873 A1 | 03 September 2015 |
| | | EP 3113395 A1 | 04 January 2017 |
| | | EP 3113395 A4 | 30 August 2017 |
| | | EP 3113395 B1 | 15 January 2020 |
| CN 105493460 A | 13 April 2016 | WO 2015031075 A1 | 05 March 2015 |
| | | US 2016191218 A1 | 30 June 2016 |
| | | JP 2016531522 A | 06 October 2016 |
| | | EP 3039836 A1 | 06 July 2016 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202011311649